(19) Europäisches Patentamt / European Patent Office / Office européen des brevets

(11) **EP 4 668 372 A1**

(12) **EUROPEAN PATENT APPLICATION**
published in accordance with Art. 153(4) EPC

(43) Date of publication:
**24.12.2025 Bulletin 2025/52**

(21) Application number: **24780957.7**

(22) Date of filing: **28.05.2024**

(51) International Patent Classification (IPC):
**H01M 4/66** (2006.01)          **H01M 4/13** (2010.01)

(52) Cooperative Patent Classification (CPC):
**H01M 4/13; H01M 4/66;** Y02E 60/10

(86) International application number:
**PCT/JP2024/019608**

(87) International publication number:
**WO 2024/204865 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.03.2023  JP 2023052346**

(71) Applicant: Mitsui Chemicals, Inc.
**Tokyo 104-0028 (JP)**

(72) Inventors:
• **FANG, Nan**
  **Sodegaura-shi, Chiba 299-0265 (JP)**

• **SUGIHARA, Yuri**
  **Sodegaura-shi, Chiba 299-0265 (JP)**
• **TOMITA, Yoshihiko**
  **Sodegaura-shi, Chiba 299-0265 (JP)**
• **MIZUNO, Yu**
  **Sodegaura-shi, Chiba 299-0265 (JP)**
• **ONISHI, Hitoshi**
  **Sodegaura-shi, Chiba 299-0265 (JP)**

(74) Representative: **Hoffmann Eitle
Patent- und Rechtsanwälte PartmbB
Arabellastraße 30
81925 München (DE)**

Remarks:
The filing date of the international application is
within two months from the date of expiration of the
priority period (R. 26bis.3 PCT)

(54) **COMPOSITION, UNDERCOAT LAYER, ELECTRODE, AND LITHIUM-ION SECONDARY
BATTERY**

(57)    The composition of the disclosure contains a conductive carbon material (A), an olefin resin (B), and an acrylic water-soluble polymer (C). The acrylic water-soluble polymer (C) has a structural unit derived from a (meth)acrylamide, and a structural unit derived from a vinyl monomer having at least one of a carboxy group or a hydroxy group. A content of the structural unit derived from a (meth)acrylamide is from 35% by mass to 95% by mass with respect to a total amount of the acrylic water-soluble polymer (C). A content of the structural unit derived from a vinyl monomer having at least one of a carboxy group or a hydroxy group is from 5% by mass to 65% by mass with respect to the total amount of the acrylic water-soluble polymer (C).

**EP 4 668 372 A1**

**Description**

Technical Field

The present disclosure relates to a composition, an undercoat layer, an electrode, and a lithium-ion secondary battery.

Background Art

In recent years, lithium-ion secondary batteries have been widely used as power sources for electronic devices, electric vehicles, and power storage. Especially recently, there is a demand for high-capacity and high-output batteries having a high energy density that can be mounted on hybrid vehicles and the like. Such lithium-ion secondary batteries have an advantage of having a high energy density. On the other hand, the use of lithium metal and lithium ions therein requires sufficient measures for safety.

Patent Document 1 discloses a positive electrode for lithium-ion secondary batteries that improves the safety of a lithium-ion secondary battery. The positive electrode disclosed in Patent Document 1 includes a positive electrode current collector and a positive electrode mixture layer. The positive electrode mixture layer is disposed on at least one surface of the positive electrode current collector. The positive electrode mixture layer has a positive electrode mixture layer and an undercoat layer. The undercoat layer is formed between the positive electrode current collector and the positive electrode mixture layer. The undercoat layer contains a conductive aid, a binder, and thermally expandable microcapsules. The thermally expandable microcapsules have a maximum volume expansion temperature of from 70°C to 180°C.

Patent Document 2 discloses a secondary battery in which, for the purpose of inhibiting an increase in battery temperature in the event of an internal short circuit, an intermediate layer that contains a cured product of a curable resin having a specific functional group and a conductive material is provided between a positive electrode current collector and a positive electrode mixture layer.

Patent Document 1: WO 2019/189866
Patent Document 2: WO 2018/198689

SUMMARY OF THE INVENTION

Technical Problem

There is a demand for a lithium-ion secondary battery excellent in safety, in which the charge-discharge initial direct-current resistance is suppressed and an increase in the direct-current resistance after long-term storage of the lithium-ion secondary battery in a high-temperature environment is inhibited, and which exhibits excellent battery performance. The output of a lithium-ion secondary battery in which the charge-discharge initial direct-current resistance is suppressed is superior to that of a lithium-ion secondary battery in which the charge-discharge initial direct-current resistance is not suppressed. The service life of a lithium-ion secondary battery in which an increase in the direct-current resistance after long-term storage in a high-temperature environment is inhibited is superior to that of a lithium-ion secondary battery in which an increase in the direct-current resistance after long-term storage in a high-temperature environment is not inhibited.

An object of one embodiment of the disclosure is to provide: a composition (preferably an undercoat composition) that is suitable for the formation of an electrode excellent in safety, in which the charge-discharge initial direct-current resistance is kept low and an increase in the direct-current resistance in a high-temperature environment (particularly after long-term storage) is inhibited; and an undercoat layer.

An object of another embodiment of the disclosure is to provide: a highly safe electrode in which the charge-discharge initial direct-current resistance is kept low and an increase in the direct-current resistance in a high-temperature environment (particularly after long-term storage) is inhibited, and which can stably provide excellent battery performance; and a lithium-ion secondary battery.

Solution to Problem

Concrete means for solving the above-described problems encompass the following aspects.

<1> A composition, containing:

a conductive carbon material (A);

an olefin resin (B); and
an acrylic water-soluble polymer (C), wherein:

the acrylic water-soluble polymer (C) contains a structural unit derived from a (meth)acrylamide, and a structural unit derived from a vinyl monomer having at least one of a carboxy group or a hydroxy group,
a content of the structural unit derived from a (meth)acrylamide is from 35% by mass to 95% by mass with respect to a total amount of the acrylic water-soluble polymer (C), and
a content of the structural unit derived from a vinyl monomer having at least one of a carboxy group or a hydroxy group is from 5% by mass to 65% by mass with respect to the total amount of the acrylic water-soluble polymer (C).

<2> The composition according to <1>, wherein:

a content of the conductive carbon material (A) is from 1% by mass to 30% by mass with respect to a total amount of the composition,
a content of the olefin resin (B) is from 30% by mass to 90% by mass with respect to the total amount of the composition, and
a content of the acrylic water-soluble polymer (C) is from 1% by mass to 20% by mass with respect to the total amount of the composition.

<3> The composition according to <1> or <2>, wherein the olefin resin (B) contains an ethylene resin or a propylene resin.
<4> The composition according to any one of <1> to <3>, wherein the olefin resin (B) has a particle size of from 0.1 $\mu$m to 9.0 $\mu$m, and a softening point of 70°C or higher.
<5> The composition according to any one of <1> to <4>, wherein the acrylic water-soluble polymer (C) contains a structural unit derived from a (meth)acrylamide, a structural unit derived from a carboxy group-containing vinyl monomer, and a structural unit derived from a hydroxy group-containing vinyl monomer.
<6> The composition according to any one of <1> to <5>, wherein the acrylic water-soluble polymer (C) has a Tg of 150°C or higher.
<7> The composition according to any one of <1> to <6>, further containing an additive (D), wherein:
a content of the additive (D) is from 1% by mass to 50% by mass with respect to the total amount of the composition.
<8> The composition according to <7>, wherein the additive (D) contains carboxymethyl cellulose.
<9> The composition according to <7> or <8>, wherein the additive (D) contains at least one of a thermally expandable microcapsule having a maximum volume expansion temperature of from 70°C to 180°C, or an inorganic oxide filler.
<10> The composition according to any one of <1> to <9>, wherein a ratio (D99/D10) of a particle size distribution D99 with respect to a particle size distribution D10, as measured by a laser diffraction-scattering method, is 35 or lower.
<11> The composition according to any one of <1> to <10>, wherein the particle size distribution D99 measured by the laser diffraction-scattering method is 20 $\mu$m or less.
<12> The composition according to any one of <1> to <11>, wherein a ratio (D99/D50) of the particle size distribution D99 with respect to a particle size distribution D50, as measured by the laser diffraction-scattering method, is 20 or lower.
<13> An undercoat layer, containing the composition according to any one of <1> to <12>.
<14> An electrode, including:

a current collector;
the undercoat layer according to <13>; and
a mixture layer.

<15> The electrode according to <14>, wherein the current collector, the undercoat layer, and the mixture layer are layered in this order.
<16> A lithium-ion secondary battery, including the electrode according to <14> or <15>.

Advantageous Effects of Invention

According to the disclosure, the following are provided: a composition (preferably an undercoat composition) that is suitable for the formation of an electrode excellent in safety, in which the charge-discharge initial direct-current resistance is kept low and an increase in the direct-current resistance in a high-temperature environment (particularly after long-term storage) is inhibited; and an undercoat layer.

According to another embodiment of the disclosure, the following are provided: a highly safe electrode in which the charge-discharge initial direct-current resistance is kept low and an increase in the direct-current resistance in a high-temperature environment (particularly after long-term storage) is inhibited, and which can stably provide excellent battery performance; and a lithium-ion secondary battery.

BRIEF DESCRIPTION OF DRAWINGS

[FIG. 1] FIG. 1 is a schematic perspective view illustrating a laminate-type battery, which is one example of the lithium-ion secondary battery of the disclosure.
[FIG. 2] FIG. 2 is a schematic cross-sectional view illustrating a positive electrode in the lithium-ion secondary battery according to one embodiment of the disclosure.
[FIG. 3] FIG. 3 is a schematic cross-sectional view illustrating a negative electrode in the lithium-ion secondary battery according to one embodiment of the disclosure.
[FIG. 4] FIG. 4 is a schematic side view illustrating one example of a three-roll mill.

DESCRIPTION OF EMBODIMENTS

The contents of the disclosure will now be described in detail. The description of requirements below may be made on the basis of a representative embodiment of the disclosure; however, the invention is not restricted to such an embodiment.
In the disclosure, those numerical ranges that are expressed with "to" each denote a range that includes the numerical values stated before and after "to" as the lower limit value and the upper limit value, respectively. In a set of numerical ranges that are stated in a stepwise manner in the disclosure, the upper limit value or the lower limit value of one numerical range may be replaced with the upper limit value or the lower limit value of other numerical range. Further, in a numerical range stated in the disclosure, the upper limit value or the lower limit value of the numerical range may be replaced with a relevant value indicated in any of Examples.
In the present specification, where a group (atomic group) is described without an indication of whether it is substituted or unsubstituted, the group encompasses both cases of being a group (atomic group) having no substituent and being a group (atomic group) having a substituent. For example, an "alkyl group" encompasses not only an alkyl group having no substituent (unsubstituted alkyl group) but also an alkyl group having a substituent (substituted alkyl group).
In the present specification, "(meth)acrylate" represents either or both of acrylate and methacrylate, "(meth) acryl" represents either or both of acryl and methacryl, and "(meth)acryloyl" represents either or both of acryloyl and methacryloyl.
The term "step" used herein encompasses not only a discrete step but also a step that cannot be clearly distinguished from other steps, as long as the expected effects of the step are achieved.
The disclosure will now be described in detail.

(1) Composition

The composition of the disclosure contains a conductive carbon material (A), an olefin resin (B), and an acrylic water-soluble polymer (C). The acrylic water-soluble polymer (C) contains a structural unit derived from a (meth) acrylamide, and a structural unit derived from a vinyl monomer having at least one of a carboxy group or a hydroxy group. A content of the structural unit derived from a (meth)acrylamide is from 35% by mass to 95% by mass with respect to a total amount of the acrylic water-soluble polymer (C). A content of the structural unit derived from a vinyl monomer having at least one of a carboxy group or a hydroxy group is from 5% by mass to 65% by mass with respect to the total amount of the acrylic water-soluble polymer (C).
The term "conductive carbon material" used herein refers to a carbon material having a volume resistivity at 20°C of less than 40 Ω·cm, preferably less than 3 Ω·cm.
The term "olefin resin" used herein refers to a resin that contains a structural unit derived from an olefin. Specifically, the term "olefin resin" encompasses a homopolymer of an olefin, a copolymer of two or more kinds of olefins, and a copolymer of an olefin and other monomer.
The term "acrylic water-soluble polymer" used herein refers to a polymer that contains a structural unit derived from a (meth)acryloyl group-containing monomer (hereinafter, also referred to as "(meth)acrylic monomer"). The term "acrylic water-soluble polymer" encompasses a homopolymer of a (meth)acrylic monomer, and a copolymer of two or more kinds of (meth)acrylic monomers.
The term "water-soluble polymer" used herein refers to a polymer that has a residual solid content of 0.1% or less when 1 g of the polymer is dissolved in 100 mL of water with stirring for 24 hours and subsequently filtered through a 300-mesh metal wire screen.

The terms "content" and "added amount" used herein are regarded as substantially the same.

The composition of the disclosure has the above-described configuration and, therefore, can form an electrode excellent in safety, in which the charge-discharge initial direct-current resistance is kept low and an increase in the direct-current resistance in a high-temperature environment (particularly after long-term storage) is inhibited. In other words, when the composition of the disclosure is applied to a secondary battery provided with an electrode, a lithium-ion secondary battery having a good balance between safety and battery performance (i.e., output and service life) can be obtained.

The reason why the effects of the disclosure are exerted is not necessarily clear; however, it is presumed as follows.

Among the resin components contained in the composition of the disclosure, the water-soluble olefin resin (B) bears the function of melting in a lower temperature range. In other words, the water-dispersible olefin resin (B) is advantageous for exerting a shutdown function at the time of heat generation. The acrylic water-soluble polymer (C) contains (meth)acrylamide that has excellent heat resistance. By this, when the composition of the disclosure is used as a raw material of an undercoat layer, the heat resistance, the electrolyte resistance, and the ion permeability of the undercoat layer are improved in a well-balanced manner. Therefore, an electrode excellent in safety, in which the charge-discharge initial direct-current resistance is kept low and an increase in the direct-current resistance in a high-temperature environment (particularly after long-term storage) is greatly reduced, is obtained. As a result, when a lithium secondary battery is produced using the composition of the disclosure, a lithium-ion secondary battery having a good balance between safety and battery performance (i.e., output and service life) is obtained.

The composition of the disclosure can be suitably used in, for example, a component or the like of an electrode of a lithium-ion secondary battery. Specifically, in a lithium-ion secondary battery provided with an electrode in which an undercoat layer and a mixture layer are layered in this order on at least one of the main surfaces of a current collector, the composition of the disclosure is preferably used for the formation of the undercoat layer included in the electrode. Particularly, in a lithium-ion secondary battery provided with a positive electrode in which an undercoat layer and a mixture layer are layered in this order on at least one of the main surfaces of a current collector, the composition of the disclosure is more preferably used for the formation of the undercoat layer included in the positive electrode.

The term "current collector" used herein refers to a sheet-like material that is used for collecting electrons generated from an active material and supplying electrons to the active material in a lithium-ion secondary battery. The "main surfaces of a current collector" means a pair of opposing surfaces having the largest area among plural pairs of opposing surfaces.

(1.1) Conductive Carbon Material (A)

The composition of the disclosure contains a conductive carbon material (A). By this, the electrical resistance of the composition of the disclosure is reduced.

The conductive carbon material (A) may be, for example, a graphite, a carbon black, a conductive carbon fiber, or a fullerene. Examples of the graphite include artificial graphite and natural graphite (e.g., flake graphite, bulk graphite, and earthy graphite). Examples of the conductive carbon fiber (A) include carbon nanotubes, carbon nanofibers, and carbon fibers. The conductive carbon material (A) may be used singly, or in combination of two or more kinds thereof.

The shape of the conductive carbon material (A) is not particularly limited, and the conductive carbon material (A) may be in the form of particles. When the conductive carbon material (A) is in the form of particles, the particle size of the conductive carbon material (A) is not particularly limited. From the standpoint of dispersing the conductive carbon material (A) between particles contained in an undercoat layer and allowing the conductive carbon material (A) to function as a conductive aid, the particle size of the conductive carbon material (A) is preferably 5 $\mu$m or less, more preferably from 1 $\mu$m to 4 $\mu$m. In this case, the particles of the conductive carbon material have a primary particle size of preferably 0.5 $\mu$m or less, more preferably from 0.1 $\mu$m to 0.4 $\mu$m.

The particle size of the conductive carbon material (A) refers to a particle size that corresponds to a cumulative volume of 50% from the fine particle side (particle size distribution D50, median diameter) in a volume-based particle size distribution measured by a particle size distribution analyzer based on a laser diffraction-scattering method.

The conductive carbon material (A) may be a commercially available product. Examples of a commercially available product of carbon black include "SUPER-P" (manufactured by Timcal Ltd.). Examples of a commercially available product of flake graphite include "KS-6" (manufactured by TIMREX).

A content of the conductive carbon material (A) is not particularly limited, and it is preferably from 1% by mass to 30% by mass with respect to a total amount of the composition. When the content of the conductive carbon material (A) is in this range, the composition of the disclosure contains a large number of contact points between respective instances of the conductive carbon material (A), so that the electrical resistance of the composition of the disclosure at normal temperature can be reduced by a percolation effect. Further, in the event of a rapid increase in the temperature of a lithium-ion secondary battery, the contact between respective instances of the conductive carbon materials (A) is unlikely to be maintained and the electrical resistance of an undercoat layer increases, so that the resulting lithium-ion secondary battery can exert a shutdown function. In other words, the lithium-ion secondary battery has excellent safety. The shutdown function includes prevention of the progress of the battery reaction of the lithium-ion secondary battery. The "battery reaction" refers to intercalation and deintercalation of lithium ions that take place between a positive electrode and a negative electrode.

The higher the content of the conductive carbon material (A), the superior the battery performance of the lithium-ion secondary battery tends to be.

From the standpoint of ensuring the shutdown function, the content of the conductive carbon material (A) is preferably 28% by mass or less, more preferably 25% by mass or less, still more preferably 20% by mass or less, with respect to the total amount of the composition. From the standpoint of ensuring the battery performance, the content of the conductive carbon material (A) is preferably 3% by mass or more, more preferably 5% by mass or more, still more preferably 10% by mass or more, with respect to the total amount of the composition.

(1.2) Olefin Resin (B)

The composition of the disclosure contains an olefin resin (B). By this, when the composition of the disclosure is used as a raw material of an undercoat layer, a lithium-ion secondary battery is unlikely to undergo thermal runaway, and the safety of the lithium-ion secondary battery is further improved.

The material of the olefin resin (B) is not particularly limited. From the standpoint of allowing the shutdown function to be exerted more effectively through melting of the olefin resin (B) in a lower temperature range in the event of a rapid increase in the temperature of the lithium-ion secondary battery (hereinafter, referred to as "effective exertion of the shutdown function"), the softening point of the olefin resin (B) is preferably 150°C or lower, more preferably 140°C or lower, still more preferably 135°C or lower. From the standpoint of maintaining the shape of the olefin resin (B) before and after the execution of a drying treatment performed in the positive electrode production process (hereinafter, referred to as "shape retention of the olefin resin (B) in the positive electrode drying step"), the softening point of the olefin resin (B) is preferably 70°C or higher, more preferably 90°C or higher, still more preferably 110°C or higher, particularly preferably 120°C or higher. The softening point of the olefin resin (B) is preferably from 70°C to 150°C.

The softening point of the olefin resin (B) is a value measured in accordance with JIS K2207 (ring-and-ball method).

Examples of the olefin resin (B) include ethylene resins (e.g., polyethylenes, ethylene-vinyl acetate copolymers (EVA), and polyethylene oxides), propylene resins (e.g., polypropylenes), polyvinyl chlorides, polyvinylidene chlorides, polyvinyl fluorides, polyvinylidene fluorides, polyamides, polystyrenes, polyacrylonitriles, and polymethyl (meth)acrylates. Thereamong, the olefin resin (B) preferably contains an ethylene resin or a propylene resin from the standpoint of achieving both effective exertion of the shutdown function and shape retention of the olefin resin in the positive electrode drying step.

The "ethylene resin" refers to a resin containing ethylene as a main component, and the "propylene resin" refers to a resin containing propylene as a main component. The term "main component" used herein means a component that is contained in a resin in the largest amount. Examples of the ethylene resin include homopolymers and copolymers of ethylene. Thereamong, the ethylene resin is preferably a copolymer of ethylene and at least one $\alpha$-olefin. Examples of the propylene resin include homopolymers and copolymers of propylene.

The olefin resin (B) preferably contains a water-dispersible olefin resin. By this, when the composition of the disclosure is used as a raw material of an undercoat layer, a lithium-ion secondary battery is less likely to undergo thermal runaway, and the safety of the lithium-ion secondary battery is improved.

The term "water-dispersible olefin resin" used herein refers to an olefin resin that can be dispersed in water even without an addition of at least one of a surfactant or an organic solvent.

Examples of the material of the water-dispersible olefin resin include polyethylenes, polyethylene-based elastomers, polyolefin ionomers, and EVA.

A content of the water-dispersible olefin resin is not particularly limited, and it is preferably 20% by mass or more, more preferably 50% by mass or more, and may be 100% by mass, with respect to a total amount of the olefin resin (B).

As the olefin resin (B), any commercially available product may be used.

Examples of commercially available products of the olefin resin (B) include CHEMIPEARL (registered trademark) Series (polyolefin aqueous dispersions) manufactured by Mitsui Chemicals, Inc. Examples of a particulate aqueous dispersion of polyethylene or polypropylene include WP100, W100, W200, W300, W308, W310, W400, W401, W410, W4005, W500, WF640, W700, W800, W900, W950, P301W, and WH201.

The shape of the olefin resin (B) is not particularly limited, and the olefin resin (B) may be in the form of particles. When the olefin resin (B) is in the form of particles, the particle size of the olefin resin (B) is not particularly limited. From the standpoint of adjusting the particle size of the olefin resin such that the thickness of the undercoat layer is controlled to be in an optimum range, the particle size of the olefin resin (B) is, in terms of average primary particle size, preferably 9.0 $\mu$m or less, more preferably 4.0 $\mu$m or less, still more preferably 2.0 $\mu$m or less. From the standpoint of the workability of the composition (e.g., undercoat layer slurry), the particle size of the olefin resin (B) is preferably 0.1 $\mu$m or more, more preferably 0.5 $\mu$m or more. The particle size of the olefin resin (B) is from 0.1 $\mu$m to 9.0 $\mu$m. The smaller the particle size of the olefin resin (B), the more likely is the olefin resin (B) to aggregate.

The particle size of the olefin resin (B) is the value of average primary particle size determined by a Coulter counter method.

It is preferred that the olefin resin (B) has a particle size of from 0.1 $\mu$m to 9.0 $\mu$m, and a softening point of 70°C or higher. By this, when the composition of the disclosure is used as a raw material of an undercoat layer, a lithium-ion secondary battery is less likely to undergo thermal runaway, and the safety of the lithium-ion secondary battery is further improved.

The olefin resin (B) may be used singly, or in combination of two or more kinds thereof.

A content of the olefin resin (B) is preferably from 30% by mass to 90% by mass with respect to the total amount of the composition. When the content of the olefin resin (B) is in this range, the shutdown function can be ensured in a favorable manner.

The higher the content of the olefin resin (B), the superior is the safety of a lithium-ion secondary battery, but the battery performance of the lithium-ion secondary battery tends to be deteriorated. In other words, there is a trade-off relationship between the safety of a lithium-ion secondary battery and the battery performance of the lithium-ion secondary battery. From this standpoint and the standpoint of reducing the resistance of the undercoat layer, the content of the olefin resin (B) is preferably 80% by mass or less, more preferably 75% by mass or less, with respect to the total amount of the composition. Further, from the standpoint of effective exertion of the shutdown function, the content of the olefin resin (B) is preferably 35% by mass or more, more preferably 40% by mass or more, still more preferably 50% by mass or more, particularly preferably 60% by mass or more, with respect to the total amount of the composition.

(1.3) Acrylic Water-Soluble Polymer (C)

The composition of the disclosure contains an acrylic water-soluble polymer (C).

A content of the acrylic water-soluble polymer (C) is not particularly limited, and it is preferably from 1% by mass to 20% by mass with respect to the total amount of the composition.

The content of the acrylic water-soluble polymer (C) is not particularly limited, and it is preferably 1% by mass or more, more preferably 2% by mass or more, still more preferably 3% by mass or more, with respect to the total amount of the composition. The content of the acrylic water-soluble polymer (C) is not particularly limited, and it is preferably 20% by mass or less, more preferably 15% by mass or less, still more preferably 10% by mass or less, with respect to the total amount of the composition.

The acrylic water-soluble polymer (C) has a structural unit derived from a (meth)acrylamide, and a structural unit derived from a vinyl monomer having at least one of a carboxy group or a hydroxy group (hereinafter, also referred to as "specific vinyl monomer"). The content of the structural unit derived from a (meth)acrylamide is from 35% by mass to 95% by mass with respect to the total amount of the acrylic water-soluble polymer (C). The content of the structural unit derived from the specific vinyl monomer is from 5% by mass to 65% by mass with respect to the total amount of the acrylic water-soluble polymer (C).

The glass transition temperature (Tg) of the acrylic water-soluble polymer (C) is not particularly limited; however, it is preferably 150°C or higher. This leads to a superior heat resistance of an undercoat layer.

The glass transition temperature (Tg) of the acrylic water-soluble polymer (C) is not particularly limited; however, it is preferably from 150°C to 400°C.

From the standpoint of obtaining an undercoat layer having superior heat resistance, the glass transition temperature (Tg) of the acrylic water-soluble polymer (C) is more preferably 200°C or higher, still more preferably 210°C or higher, particularly preferably 220°C or higher, further preferably 230°C or higher, further more preferably 240°C or higher. The glass transition temperature (Tg) of the water-soluble polymer is preferably 400°C or lower, more preferably 300°C or lower, still more preferably 280°C or lower.

A method of measuring the glass transition temperature (Tg) is the same as the method described below in the section of Examples.

The content of the structural unit derived from a (meth)acrylamide is 35% by mass or more, preferably 60% by mass or more, more preferably 70% by mass or more, still more preferably 75% by mass or more, with respect to the total amount of the acrylic water-soluble polymer (C). From the standpoint of obtaining an undercoat layer having excellent heat resistance, the content of the structural unit derived from a (meth)acrylamide is preferably 95% by mass or less, more preferably 90% by mass or less, still more preferably 80% by mass or less, with respect to the total amount of the acrylic water-soluble polymer (C).

The content of the structural unit derived from the specific vinyl monomer is 5% by mass or more, preferably 10% by mass or more, more preferably 20% by mass or more, with respect to the total amount of the acrylic water-soluble polymer (C). From the standpoint of obtaining an undercoat layer having excellent heat resistance, the content of the structural unit derived from the specific vinyl monomer is preferably 65% by mass or less, more preferably 40% by mass or less, still more preferably 30% by mass or less, with respect to the total amount of the acrylic water-soluble polymer (C).

The acrylic water-soluble polymer preferably has a structural unit derived from a (meth)acrylamide, a structural unit derived from a vinyl monomer having a carboxy group (hereinafter, also referred to as "carboxy group-containing vinyl monomer"), and a structural unit derived from a vinyl monomer having a hydroxy group (hereinafter, also referred to as "hydroxy group-containing vinyl monomer"). By this, excellent adhesion between the conductive carbon material (A) and the olefin resin (B) can be obtained, and the binding strength attributed to the interaction between acrylic polymers can be improved.

When the acrylic water-soluble polymer (C) has a structural unit derived from a carboxy group-containing vinyl monomer and a structural unit derived from a hydroxy group-containing vinyl monomer, the content of the structural unit derived from a carboxy group-containing vinyl monomer is preferably in the following range.

The content of the structural unit derived from a carboxy group-containing vinyl monomer is preferably from 3% by mass to 35% by mass with respect to the total amount of the acrylic water-soluble polymer (C).

The content of the structural unit derived from a carboxy group-containing vinyl monomer is preferably 3% by mass or more, more preferably 5% by mass or more, still more preferably 7% by mass or more, with respect to the total amount of the acrylic water-soluble polymer (C). From the standpoint of obtaining an undercoat layer having excellent heat resistance, the content of the structural unit derived from a carboxy group-containing vinyl monomer is preferably 35% by mass or less, more preferably 30% by mass or less, still more preferably 20% by mass or less, with respect to the total amount of the acrylic water-soluble polymer (C).

When the acrylic water-soluble polymer (C) has a structural unit derived from a carboxy group-containing vinyl monomer and a structural unit derived from a hydroxy group-containing vinyl monomer, the content of the structural unit derived from a hydroxy group-containing vinyl monomer is preferably in the following range.

The content of the structural unit derived from a hydroxy group-containing vinyl monomer is preferably from 2% by mass to 30% by mass with respect to the total amount of the acrylic water-soluble polymer (C).

The content of the structural unit derived from a hydroxy group-containing vinyl monomer is preferably 2% by mass or more, more preferably 5% by mass or more, still more preferably 13% by mass or more, with respect to the total amount of the acrylic water-soluble polymer (C). From the standpoint of obtaining an undercoat layer having excellent heat resistance, the content of the structural unit derived from a hydroxy group-containing vinyl monomer is preferably 30% by mass or less, more preferably 20% by mass or less, still more preferably 15% by mass or less, with respect to the total amount of the acrylic water-soluble polymer (C).

(1.3.1) Raw Materials of Acrylic Water-Soluble Polymer (C)

The acrylic water-soluble polymer (C) is a polymer obtained by polymerizing acrylic water-soluble polymer raw materials. The raw materials of the acrylic water-soluble polymer (C) (hereinafter, also referred to as "acrylic water-soluble polymer raw materials") contain a (meth)acrylamide and a specific vinyl monomer.

(1.3.1.1) (Meth)acrylamide

The (meth)acrylamide may be a combination of methacrylamide and acrylamide, or may be methacrylamide or acrylamide. From the standpoint of improving the heat resistance, the (meth)acrylamide is preferably methacrylamide.

A content of the (meth)acrylamide is preferably from 35% by mass to 95% by mass with respect to a total amount of the acrylic water-soluble polymer raw materials.

The content of the (meth)acrylamide is preferably 35% by mass or more, more preferably 60% by mass or more, still more preferably 70% by mass or more, particularly preferably 75% by mass or more, with respect to the total amount of the acrylic water-soluble polymer raw materials. From the standpoint of obtaining excellent heat resistance, the content of the (meth)acrylamide is preferably 95% by mass or less, more preferably 90% by mass or less, still more preferably 80% by mass or less, with respect to the total amount of the acrylic water-soluble polymer raw materials.

(1.3.1.2) Specific Vinyl Monomer

The specific vinyl monomer is copolymerizable with the (meth)acrylamide, and has at least one of a carboxy group or a hydroxy group.

The specific vinyl monomer is at least one selected from the group consisting of a carboxy group-containing vinyl monomer and a hydroxy group-containing vinyl monomer. From the standpoint of improving the adhesion between the conductive carbon material (A) and the olefin resin (B) as well as the adhesion attributed to the interaction between binders, the specific vinyl monomer is preferably a carboxy group-containing vinyl monomer and a hydroxy group-containing vinyl monomer.

A content of the specific vinyl monomer is preferably 5% by mass or more, more preferably 10% by mass or more, still more preferably 20% by mass or more, with respect to the total amount of the acrylic water-soluble polymer raw materials. The content of the specific vinyl monomer is preferably 65% by mass or less, more preferably 40% by mass or less, still more preferably 30% by mass or less, with respect to the total amount of the acrylic water-soluble polymer raw materials.

(1.3.1.2.1) Carboxy Group-Containing Vinyl Monomer

The carboxy group-containing vinyl monomer may be, for example, a monocarboxylic acid, a dicarboxylic acid, or a salt thereof. Examples of the monocarboxylic acid include (meth)acrylic acids. Examples of the dicarboxylic acid include itaconic acid, maleic acid, fumaric acid, itaconic anhydride, maleic anhydride, and fumaric anhydride. These carboxy group-containing vinyl monomers may be used singly, or in combination of two or more kinds thereof.

The carboxy group-containing vinyl monomer is preferably a monocarboxylic acid, more preferably a (meth) acrylic acid, still more preferably methacrylic acid.

The content of the carboxy group-containing vinyl monomer is preferably from 3% by mass to 35% by mass with respect to the total amount of the acrylic water-soluble polymer raw materials.

The content of the carboxy group-containing vinyl monomer is preferably 3% by mass or more, more preferably 5% by mass or more, still more preferably 7% by mass or more, with respect to the total amount of the acrylic water-soluble polymer raw materials. The content of the carboxy group-containing vinyl monomer is preferably 35% by mass or less, more preferably 30% by mass or less, still more preferably 20% by mass or less, with respect to the total amount of the acrylic water-soluble polymer raw materials.

The content of the carboxy group-containing vinyl monomer is preferably from 20% by mass to 95% by mass with respect to a total amount of the specific vinyl monomer.

The content of the carboxy group-containing vinyl monomer is preferably 20% by mass or more, more preferably 25% by mass or more, still more preferably 30% by mass or more, with respect to the total amount of the specific vinyl monomer. The content of the carboxy group-containing vinyl monomer is preferably 95% by mass or less, more preferably 90% by mass or less, still more preferably 85% by mass or less, with respect to the total amount of the specific vinyl monomer.

(1.3.1.2.2) Hydroxy Group-Containing Vinyl Monomer

The hydroxy group-containing vinyl monomer encompasses a vinyl monomer having a hydroxy group but not a carboxy group (hereinafter, also referred to as "hydroxy group-containing vinyl monomer (c10)") and a vinyl monomer having a hydroxy group and a carboxy group (hereinafter, also referred to as "hydroxy group-containing vinyl monomer (c20)").

Examples of the hydroxy group-containing vinyl monomer (c10) include a hydroxy group-containing mono(meth) acrylate (c11), a hydroxy group-containing di(meth)acrylate (c12), and a hydroxy group-containing tri(meth)acrylate (c13).

Examples of the hydroxy group-containing mono(meth)acrylate (c11) include 2-hydroxyethyl (meth)acrylate, 2-hydroxypropyl (meth)acrylate, 3-hydroxypropyl (meth)acrylate, 2-hydroxy-3-phenoxypropyl (meth)acrylate, 3-chloro-2-hydroxypropyl (meth)acrylate, butanediol mono(meth)acrylate, polyethylene glycol mono(meth)acrylate, 2-(6-hydrohexanoyloxy)ethyl acrylate, glycerin mono(meth)acrylate, trimethylolpropane mono(meth)acrylate, and pentaerythritol mono(meth)acrylate.

Examples of the hydroxy group-containing di(meth)acrylate (c12) include glycerin di(meth)acrylate, trimethylolpropane di(meth)acrylate, and pentaerythritol di(meth)acrylate.

Examples of the hydroxy group-containing tri(meth)acrylate (c13) include pentaerythritol tri(meth)acrylate.

These monomers may be used singly, or in combination of two or more kinds thereof.

The hydroxy group-containing vinyl monomer (c10) is preferably the hydroxy group-containing mono(meth) acrylate (c11), more preferably at least one of 2-hydroxyethyl (meth)acrylate or 2-hydroxypropyl (meth)acrylate, still more preferably 2-hydroxyethyl methacrylate.

A content of the hydroxy group-containing vinyl monomer (c10) is from 2% by mass to 30% by mass with respect to the total amount of the acrylic water-soluble polymer raw materials.

The content of the hydroxy group-containing vinyl monomer (c10) is preferably 2% by mass or more, more preferably 5% by mass or more, still more preferably 13% by mass or more, with respect to the total amount of the acrylic water-soluble polymer raw materials. The content of the hydroxy group-containing vinyl monomer (c10) is preferably 30% by mass or less, more preferably 20% by mass or less, still more preferably 15% by mass or less, with respect to the total amount of the acrylic water-soluble polymer raw materials.

The content of the hydroxy group-containing vinyl monomer (c10) is preferably from 5% by mass to 80% by mass with respect to the total amount of the specific vinyl monomer.

The content of the hydroxy group-containing vinyl monomer (c10) is preferably 5% by mass or more, more preferably 10% by mass or more, still more preferably 15% by mass or more, with respect to the total amount of the specific vinyl monomer. The content of the hydroxy group-containing vinyl monomer (c10) is preferably 80% by mass or less, more preferably 75% by mass or less, still more preferably 70% by mass or less, with respect to the total amount of the specific vinyl monomer.

Examples of the hydroxy group-containing vinyl monomer (c20) include ricinoleic acid, lesquerolic acid, 15-hydroxylinoleic acid, auricolic acid, hydroxypalmitoleic acid, and caffeic acid. These monomers may be used singly, or in combination of two or more kinds thereof.

(1.3.1.3) Water-Soluble Copolymerizable monomer

The acrylic water-soluble polymer raw materials may contain a copolymerizable monomer that is copolymerizable with the (meth)acrylamide and/or the specific vinyl monomer (hereinafter, also referred to as "water-soluble copolymerizable monomer").

Examples of the water-soluble copolymerizable monomer include (meth)acrylic acid alkyl esters (e.g., methyl (meth)acrylate and ethyl (meth)acrylate), functional group-containing vinyl monomers (e.g., 2-aminoethyl (meth)acrylate, glycidyl (meth)acrylate, (meth)acrylonitrile, allylsulfonic acid, and 2-methacryloyloxyethyl acid phosphate), vinyl esters (e.g., vinyl acetate and vinyl propionate), aromatic vinyl monomers (e.g., styrene and $\alpha$-methylstyrene), N-substituted unsaturated carboxylic acid amides (e.g., N-methylol (meth)acrylamide), heterocyclic vinyl compounds (e.g., vinylpyrrolidone), vinylidene halide compounds (e.g., vinylidene chloride and vinylidene fluoride), $\alpha$-olefins (e.g., ethylene and propylene), dienes (e.g., butadiene), and crosslinkable vinyl monomers (e.g., methylene-bis(meth)acrylamide and divinylbenzene).

The content of the water-soluble copolymerizable monomer is in a range in which the water solubility of a water-soluble polymer is maintained, and it is, for example, 37% by mass or less, preferably 15% by mass or less, and 0% by mass or more, particularly preferably 0% by mass, with respect to the total amount of the acrylic water-soluble polymer raw materials.

(1.3.1.4) Method of Polymerizing Acrylic Water-Soluble Polymer Raw Materials

A water-soluble polymer can be obtained by polymerizing the acrylic water-soluble polymer raw materials by a known method. More specifically, for example, the acrylic water-soluble polymer raw materials and a polymerization initiator are blended in water, and the acrylic water-soluble polymer raw materials are polymerized, after which the resultant is aged if necessary.

The polymerization initiator is not particularly limited, and may be any known polymerization initiator. The polymerization temperature may be from 30°C to 95°C. The polymerization time may be from 0.5 hours to 20 hours. The aging time may be from 0.5 hours to 6 hours.

(1.4) Additive (D)

If necessary, the composition of the disclosure may also contain an additive (D). Depending on the type of the additive (D), various functions can be imparted to the composition of the disclosure.

The term "additive" used herein refers to a component other than the conductive carbon material (A), the olefin resin (B), and the acrylic water-soluble polymer (C).

Examples of the additive (D) include thickening stabilizers, thermally expandable microcapsules having a maximum volume expansion temperature of from 70°C to 180°C (hereinafter, simply referred to as "thermally expandable microcapsule"), inorganic oxide fillers, curable resin fillers, flake fillers, binder resins, synthetic rubbers, and a non-solid components.

The "thermally expandable microcapsule" refers to particles having an outer shell formed of a thermoplastic resin and a volatile expanding agent that is a core component encapsulated in the outer shell. Specifically, the thermally expandable microcapsules preferably soften and foam to undergo a volume expansion in a state of being in contact with the below-described electrolyte solution when exposed to a temperature (e.g., from 70°C to 160°C) immediately before the onset of thermal runaway of a lithium-ion secondary battery caused by abnormal heat generation.

The "maximum volume expansion temperature" refers to a temperature at which the expanded volume of the thermally expandable microcapsules is maximum when the volatile expanding agent contained in the thermally expandable microcapsules is gasified and the thermally expandable microcapsules expand in volume. A temperature at which the volatile expanding agent contained in the thermally expandable microcapsules is gasified and the thermally expandable microcapsules start to expand in volume is referred to as "volume expansion start temperature".

When the composition of the disclosure contains the additive (D), a content of the additive (D) is preferably from 1% by mass to 50% by mass with respect to the total amount of the composition and, when the content of the additive (D) is in this range, the shutdown function attributed to the properties of the additive (D) can be exerted more effectively.

The content of the additive (D) has a small effect on the content ratio of the conductive carbon material (A) and the olefin resin (B) and, from the standpoint of effective exertion of the shutdown function and retention of the battery performance, the content of the additive (D) is preferably 40% by mass or less, more preferably 30% by mass or less, with respect to the total amount of the composition. Meanwhile, from the standpoint of effective exertion of the shutdown function, the content of the additive (D) is preferably 5% by mass or more, more preferably 10% by mass or more, with respect to the total amount of the composition.

(1.4.1) Thickening Stabilizer

The composition of the disclosure may contain a thickening stabilizer. The composition of the disclosure does not have to contain a thickening stabilizer.

When the composition of the disclosure contains a thickening stabilizer and is used as a raw material of an undercoat layer, particles can be stably dispersed at the time of preparing an undercoat layer slurry.

Examples of the thickening stabilizer include: carboxymethyl cellulose (CMC); polyvinyl alcohol (PVA); methyl cellulose (MC), hydroxypropyl cellulose (HPC); polyethylene glycol (PEG); polyethylene oxide (PEO); polyvinylpyrrolidone (PVP); polyacrylic acid (PAA); ammonium polycarboxylates; sugars typified by glycosides such as lecithin and saponin, and polysaccharides such as xanthan gum; polyether polyols, such as sucrose polyether polyol, polyoxypropylene sorbitol ether, trimethylolpropane polyether polyol, and pentaerythritol polyether polyol; and various modified starches, such as oxidized starch, starch phosphate, and casein.

A content of the thickening stabilizer is preferably from 1% by mass to 50% by mass with respect to the total amount of the composition. From the standpoint of effective exertion of the shutdown function and retention of the battery performance, the content of the thickening stabilizer is preferably 15% by mass or less, more preferably 10% by mass or less, with respect to the total amount of the composition. From the standpoint of more effectively dispersing fine particles in an undercoat slurry, the content of the thickening stabilizer is preferably 1% by mass or more, more preferably 2% by mass or more, with respect to the total amount of the composition.

Examples of a commercially available product of CMC include "1130", "1140", "1240", "1250", "1260", "1330", "2200", and "DL100L", which are manufactured by Daicel Miraizu Ltd.

(1.4.2) Thermally Expandable Microcapsule

The composition of the disclosure may contain a thermally expandable microcapsule. The composition of the disclosure does not have to contain a thermally expandable microcapsule.

When the composition of the disclosure contains a thermally expandable microcapsule and is used as a raw material of an undercoat layer, the thermally expandable microcapsule undergoes a volume expansion due to abnormal heat generation of a lithium-ion secondary battery to efficiently increase the direct-current resistance of an electrode, so that the safety of the lithium-ion secondary battery can be improved.

The volume expansion start temperature of the thermally expandable microcapsule is preferably from 100°C to 180°C, more preferably from 110°C to 150°C, still more preferably from 120°C to 130°C. The maximum volume expansion temperature of the thermally expandable microcapsule is preferably from 100°C to 180°C, more preferably from 120°C to 170°C, still more preferably from 145°C to 155°C.

The thermoplastic resin constituting the outer shell preferably contains a vinylidene chloride-containing (co)polymer and a (meth)acrylonitrile-containing (co)polymer. This allows the thermoplastic resin constituting the outer shell to have not only excellent electrolyte resistance but also thermoplasticity and excellent gas barrier properties. Particularly, from the standpoint of electrolyte resistance, the thermoplastic resin constituting the outer shell is preferably a (co)polymer containing (meth)acrylonitrile as a main component (51% by mass or more). A raw material of the thermoplastic resin constituting the outer shell may also contain a crosslinkable monomer in addition to a polymerizable monomer so as to improve the foaming properties and the heat resistance of the resulting thermally expandable microcapsule.

As for the volatile expanding agent, the boiling point thereof is preferably selected such that the maximum volume expansion temperature of the thermally expandable microcapsule is higher than the softening point of the olefin resin (B). The boiling point is preferably selected such that the volume expansion start temperature of the thermally expandable microcapsule is equal to the softening point of the olefin resin (B). By this, when the temperature of the undercoat layer increases above the softening point of the olefin resin (B) due to heat generation of the lithium-ion secondary battery, the direct-current resistance of an electrode is efficiently increased. As a result, the safety of the lithium-ion secondary battery is further improved.

The volatile expanding agent may be, for example, a low-molecular-weight hydrocarbon having a boiling point of 100°C or lower, or a nonflammable or flame-retardant compound. As the low-molecular-weight hydrocarbon having a boiling point of 100°C or lower, a low-molecular-weight hydrocarbon is preferably used. Examples of the low-molecular-weight hydrocarbon include propane, propylene, *n*-butane, isobutane, butene, isobutene, isopentane, neopentane, *n*-pentane, *n*-hexane, isohexane, heptane, and petroleum ether. Examples of the nonflammable or flame-retardant compound include halogenated hydrocarbon (e.g., methyl chloride, methylene chloride, fluorotrichloromethane, difluorodichloromethane, and chlorotrifluoromethane), and chlorofluorocarbons. The volatile expanding agent may be used singly, or in combination of two or more kinds thereof.

The particle size of the thermally expandable microcapsule is not particularly limited, and it is preferably from 1 $\mu$m to 40 $\mu$m, more preferably from 3 $\mu$m to 30 $\mu$m, still more preferably from 5 $\mu$m to 25 $\mu$m.

The particle size of the thermally expandable microcapsule refers to a particle size that corresponds to a cumulative volume of 50% from the fine particle side (particle size distribution D50, median diameter) in a volume-based particle size distribution measured by a particle size distribution analyzer based on a laser diffraction-scattering method.

A content of the thermally expandable microcapsule is preferably from 0% by mass to 50% by mass with respect to the total amount of the composition. The content of the thermally expandable microcapsule has a small effect on the content ratio of the conductive carbon material (A) and the olefin resin (B) and, from the standpoint of the shutdown function and retention of the battery performance, the content of the thermally expandable microcapsule is preferably 50% by mass or less, more preferably 40% by mass or less, with respect to the total amount of the composition. Meanwhile, from the standpoint of enhancing the shutdown function attributed to the thermal expansion of the thermally expandable microcapsule in the event of abnormal heat generation, the content of the thermally expandable microcapsule is preferably 5% by mass or more, more preferably 10% by mass or more, with respect to the total amount of the composition.

As the thermally expandable microcapsule, any commercially available product may be used.

Examples of commercially available products of the thermally expandable microcapsule include "MATSUMOTO MICROSPHERE (registered trademark)" Series manufactured by Matsumoto Yushi-Seiyaku Co., Ltd., "EXPANCEL (registered trademark)" Series manufactured by Akzo Nobel N.V, and "ADVANCELL (registered trademark)" Series manufactured by Sekisui Chemical Co., Ltd.

(1.4.3) Inorganic Oxide Filler

The composition of the disclosure may also contain an inorganic oxide filler. The composition of the disclosure does not have to contain an inorganic oxide filler. When the composition of the disclosure contains an inorganic oxide filler, the inorganic oxide filler functions as a filling material.

Increasing a content of the inorganic oxide filler contributes to an improvement in the heat resistance of a positive electrode, while minimizing the content of the inorganic oxide filler leads to the formation of an undercoat layer that tightly adheres to a positive electrode mixture layer, and the undercoat layer melts in the event of internal short circuit, contributing to an improvement in the safety. Further, by selecting the type and physical properties of the inorganic oxide filler, a gas can be generated by allowing an electrolyte solution to decompose in the event of battery overcharge.

Examples of the inorganic oxide filler include aluminum oxide ($\alpha$-Al$_2$O$_3$, $\gamma$-Al$_2$O$_3$), aluminum hydroxide (Al(OH)$_3$), boehmite (AlOOH)), magnesia (magnesium oxide: MgO), magnesium hydroxide (Mg(OH)$_2$), zirconia (ZrO$_2$), titania (TiO$_2$), silica (SiO$_2$), silicon dioxide (SiO$_2$), silicon carbide (SiC), aluminum nitride (AlN), boron nitride (BN), mica, and graphite oxide (e.g., expanded graphite). These inorganic oxide fillers may be used singly, or in combination of two or more kinds thereof. Thereamong, the inorganic oxide filler preferably contains aluminum oxide.

The shape of the inorganic oxide filler is not particularly limited, and examples thereof include a spherical shape, a needle shape, an ellipsoidal shape, a plate shape, and a scaly shape. The particle size of the inorganic oxide filler is not particularly limited, and it is preferably from 0.01 $\mu$m to 5 $\mu$m.

The particle size of the inorganic oxide filler refers to a particle size that corresponds to a cumulative volume of 50% from the fine particle side (particle size distribution D50, median diameter) in a volume-based particle size distribution measured by a particle size distribution analyzer based on a laser diffraction-scattering method.

The content of the inorganic oxide filler is preferably from 0% by mass to 50% by mass with respect to the total amount of the composition. The content of the inorganic oxide filler has a small effect on the content ratio of the conductive carbon material (A) and the olefin resin (B) and, from the standpoint of the shutdown function and retention of the battery performance, the content of the inorganic oxide filler is preferably 40% by mass or less, more preferably 30% by mass or less, with respect to the total amount of the composition. Meanwhile, from the standpoint of reducing the fluidity of the olefin resin (B) dissolved in an undercoat layer at high temperature and maintaining the shutdown function over an extended period, the content of the inorganic oxide filler is preferably 5% by mass or more, more preferably 10% by mass or more, with respect to the total amount of the composition.

(1.4.4) Binder Resin

The composition of the disclosure may contain a binder resin as other component. By this, when the composition of the disclosure is used as a raw material of an undercoat layer, the binder resin can improve not only the physical properties of the undercoat layer (e.g., electrolyte permeability and peel strength) but also the battery performance of a lithium-ion secondary battery.

Examples of the binder resin include polyvinylidene fluorides (PVDF), polytetrafluoroethylenes (PTFE), PVDF copolymers, hydroxypropylmethyl cellulose, polyvinyl alcohols, and diacetyl cellulose. PVDF copolymers are copolymers of vinylidene fluoride and other monomer, such as PVDF-HFP (hexafluoropropylene) and PVDF-PEO (polyoxyethylene). Thereamong, the binder resin preferably contains a PVDF from the standpoint of reducing the resistance of the undercoat layer.

As the binder resin, any commercially available product may be used.

Examples of commercially available products of PVDF include KUREHA (registered trademark) KF Polymer Series manufactured by Kureha Corporation, such as "W#1100", "W#1300", "W#1700", "W#7200", and "W#7300".

The binder resin may be used singly, or in combination of two or more kinds thereof.

A content of the binder resin is preferably from 1% by mass to 20% by mass with respect to the total amount of the composition. The shutdown function depends on the balance between the content of the binder resin and a total content of the olefin resin (B) and the acrylic water-soluble polymer (C). When the content ratio of the binder resin with respect to the total amount of the composition is high, since the content ratio of the olefin resin (B) and the acrylic water-soluble polymer (C) with respect to the total amount of the composition is low, the shutdown function is believed to be deteriorated in some cases. When the content of the binder resin is in the above-described range, the workability of the composition (e.g., undercoat layer slurry) and the shutdown function can both be ensured.

From the standpoint of ensuring the shutdown function in relation to the content of the olefin resin (B) and the acrylic water-soluble polymer (C), the content of the binder resin is preferably 15% by mass or less, more preferably 10% by mass or less, with respect to the total amount of the composition. Meanwhile, from the standpoint of the workability of the composition (e.g., undercoat layer slurry), the content of the binder resin is preferably 2% by mass or more, more preferably 3% by mass or more, with respect to the total amount of the composition.

(1.4.5) Synthetic Rubber

The composition of the disclosure may also contain a synthetic resin as other component. By this, when the composition of the disclosure is used as a raw material of an undercoat layer, the adhesion between the undercoat layer and a current collector is improved, so that the battery resistance can be further reduced.

Examples of the synthetic rubber include styrene-butadiene rubbers (SBR), acrylonitrile-butadiene rubbers, acrylonitrile-butadiene-styrene rubbers, hydrogenated styrene-butadiene rubbers (HSBR), butylene rubbers, polybutadienes, and polyisoprene rubbers. Thereamong, from the standpoint of low-resistance of the undercoat layer, the synthetic rubber is preferably mixed as appropriate with a water-dispersible binder such as an SBR emulsion, and the synthetic rubber more preferably contains an SBR. The synthetic rubber may be used singly, or in combination of two or more kinds thereof.

The shape of the synthetic rubber is not particularly limited, and the synthetic rubber may be in the form of particles.

As the synthetic rubber, any commercially available product may be used. Examples of a commercially available product of the synthetic rubber include "TRD2001" (aqueous dispersion of styrene-butadiene rubber particles) manufactured by JSR Corporation.

(1.4.6) Non-Solid Component

The composition of the disclosure may also contain a non-solid component. Examples of the non-solid component include various ingredients derived from an undercoat layer slurry (e.g., surfactants, dispersants, wetting agents, and antifoaming agents), and water.

The composition of the disclosure further contains an additive (D), and it is preferred that the content of the additive (D) is from 1% by mass to 50% by mass with respect to the total amount of the composition, and that the additive (D) contains carboxymethyl cellulose. By this, the dispersion of fine particles in the undercoat slurry can be stabilized.

The composition of the disclosure further contains an additive (D), and it is preferred that the content of the additive (D) is from 1% by mass to 50% by mass with respect to the total amount of the composition, and that the additive (D) contains at least one of a thermally expandable microcapsule having a maximum volume expansion temperature of from 70°C to 180°C, or an inorganic oxide filler. By this, the shutdown function of the olefin resin (B) is more likely to be exerted.

The composition of the disclosure further contains an additive (D), and it is preferred that the content of the additive (D) is from 1% by mass to 50% by mass with respect to the total amount of the composition, and that the additive (D) contains aluminum oxide. By this, the shutdown function of the olefin resin (B) is more likely to be exerted.

(1.5) Physical Properties of Composition

Various physical properties of the composition of the disclosure will now be described.

In the composition of the disclosure, from the standpoint of forming an electrode excellent in safety in which the charge-discharge initial direct-current resistance is kept low and an increase in the direct-current resistance in a high-temperature environment is inhibited, a ratio (D99/D10) of a particle size distribution D99 with respect to a particle size distribution D10, as measured by a laser diffraction-scattering method, is preferably 35 or lower.

The "particle size distribution D99 measured by a laser diffraction-scattering method" refers to a particle size that corresponds to a cumulative volume of 99% from the fine particle side in a volume-based particle size distribution measured by a particle size distribution analyzer based on a laser diffraction-scattering method. A method of measuring the D99 is the same as the method described below in the section of Examples.

The "particle size distribution D10 measured by a laser diffraction-scattering method" refers to a particle size that corresponds to a cumulative volume of 10% from the fine particle side in a volume-based particle size distribution measured by a particle size distribution analyzer based on a laser diffraction-scattering method. A method of measuring the D10 is the same as the method described below in the section of Examples.

A ratio (D99/D10) of 35 or lower indicates that the number of aggregates of the components in the composition is small (in other words, the number of components dispersed in the composition is large). In essence, a lower ratio (D99/D10) indicates a smaller number of aggregates of the components in the composition. This means that the conductive carbon material (A) in the composition is uniformly dispersed, so that a uniform conductive path is likely to be formed in an undercoat layer. By this, the initial direct-current resistance during charging and discharging of a battery can be reduced, and an increase in the direct-current resistance after long-term storage in a high-temperature environment can be inhibited. Further, since the olefin resin (B) and the acrylic water-soluble polymer (C) are uniformly dispersed in the composition, the shutdown function is likely to be exerted efficiently. As a result, the composition of the disclosure can form an electrode excellent in safety, in which the charge-discharge initial direct-current resistance is kept low and an increase in the direct-current resistance in a high-temperature environment is greatly reduced. Therefore, a lithium-ion secondary battery having excellent battery performance can be obtained.

From the standpoint of improving the safety and the battery performance of the lithium-ion secondary battery, the ratio (D99/D10) is more preferably from 3.0 to 30.0, still more preferably from 3.0 to 22.0, particularly preferably from 3.0 to 15.0.

Examples of a method of adjusting the ratio (D99/D10) to be in the above-described range include the use of a kneader, a two-roll mill, a three-roll mill, a planetary mixer, a ball mill, a horizontal sand mill, a vertical sand mill, an annular bead mill, an attritor, a high-shear mixer, a disperser, a FILMIX, an ultrasonic or high-pressure homogenizer, or the like.

In the composition of the disclosure, the particle size distribution D99 measured by a laser diffraction-scattering method is preferably 20 $\mu$m or less. The smaller the aggregates of fine particles, the superior the dispersibility of the materials contained in the composition. When the D99 is 20 $\mu$m or less, the safety and the battery performance of the lithium-ion secondary battery are more likely to be improved as compared to a case where the D99 exceeds 20 $\mu$m. From the standpoint of improving the safety and the battery performance of the lithium-ion secondary battery, the D99 of the composition is more preferably from 2.0 $\mu$m to 20.0 $\mu$m, still more preferably from 2.0 $\mu$m to 15.0 $\mu$m, particularly preferably from 2.0 $\mu$m to 10.0 $\mu$m.

Examples of a method of adjusting the D99 of the composition to be in the above-described range include the use of a kneader, a two-roll mill, a three-roll mill, a planetary mixer, a ball mill, a horizontal sand mill, a vertical sand mill, an annular bead mill, an attritor, a high-shear mixer, a disperser, a FILMIX, an ultrasonic or high-pressure homogenizer, or the like.

In the composition of the disclosure, the particle size distribution D10 measured by a laser diffraction-scattering method is preferably from 0.1 $\mu$m to 1.5 $\mu$m, more preferably from 0.1 $\mu$m to 1.0 $\mu$m, still more preferably from 0.1 $\mu$m to 0.7 $\mu$m. From the standpoint of dispersibility, the particle size distribution D10 is preferably from 0.2 $\mu$m to 1.0 $\mu$m, more preferably from 0.4 $\mu$m to 1.0 $\mu$m. When the D10 is in this range, the dispersibility of the materials contained in the composition is excellent, so that the safety and the battery performance of the lithium-ion secondary battery are more likely to be improved as compared to a case where the D10 is outside the above-described range.

Examples of a method of adjusting the D10 to be in the above-described range include the use of a kneader, a two-roll mill, a three-roll mill, a planetary mixer, a ball mill, a horizontal sand mill, a vertical sand mill, an annular bead mill, an attritor, a high-shear mixer, a disperser, a FILMIX, an ultrasonic or high-pressure homogenizer, or the like.

In the composition of the disclosure, a ratio (D99/D50) of a particle size distribution D99 with respect to a particle size distribution D50 (hereinafter, also simply referred to as "D50"), as measured by a laser diffraction-scattering method, is preferably 20 or lower. A ratio (D99/D50) of 20 or lower indicates that the size of aggregates relative to the median diameter of fine particles in the composition is reduced. When the ratio (D99/D50) is 20 or lower, the composition has excellent dispersibility. As a result, the safety and the battery performance of the lithium-ion secondary battery are more likely to be improved as compared to a case where the ratio (D99/D50) is higher than 20. From the standpoint of improving the safety and the battery performance of the lithium-ion secondary battery, the ratio (D99/D50) is more preferably from 2.0 to 16.0, still more preferably from 2.0 to 10.0, particularly preferably from 2.0 to 6.0.

The "particle size distribution D50 measured by a laser diffraction-scattering method" refers to a particle size that corresponds to a cumulative volume of 50% from the fine particle side in a volume-based particle size distribution measured by a particle size distribution analyzer based on a laser diffraction-scattering method. A method of measuring the D50 is the same as the method described below in the section of Examples.

Examples of a method of adjusting the ratio (D99/D50) to be in the above-described range include the use of a kneader, a two-roll mill, a three-roll mill, a planetary mixer, a ball mill, a horizontal sand mill, a vertical sand mill, an annular bead mill, an attritor, a high-shear mixer, a disperser, a FILMIX, an ultrasonic or high-pressure homogenizer, or the like.

In the composition of the disclosure, the particle size distribution D50 measured by a laser diffraction-scattering method is not particularly limited, and it is preferably from 0.5 $\mu$m to 5.0 $\mu$m, more preferably from 0.5 $\mu$m to 3.0 $\mu$m, still more preferably from 0.5 $\mu$m to 2.0 $\mu$m. When the D50 is in this range, the composition has excellent dispersibility, and the safety and the battery performance of the lithium-ion secondary battery are likely to be improved.

Examples of a method of adjusting the D50 to be in the above-described range include the use of a kneader, a two-roll mill, a three-roll mill, a planetary mixer, a ball mill, a horizontal sand mill, a vertical sand mill, an annular bead mill, an attritor, a high-shear mixer, a disperser, a FILMIX, an ultrasonic or high-pressure homogenizer, or the like.

In the composition of the disclosure, the particle size distribution D90 measured by a laser diffraction-scattering method (hereinafter, also simply referred to as "D90") is preferably from 1.0 $\mu$m to 10.0 $\mu$m, more preferably from 1.0 $\mu$m to 7.0 $\mu$m, still more preferably from 1.0 $\mu$m to 4.0 $\mu$m. When the D90 is in this range, the composition has excellent dispersibility, and the safety and the battery performance of the lithium-ion secondary battery are likely to be improved.

The "particle size distribution D90 measured by a laser diffraction-scattering method" refers to a particle size that corresponds to a cumulative volume of 90% from the fine particle side in a volume-based particle size distribution measured by a particle size distribution analyzer based on a laser diffraction-scattering method. A method of measuring the D90 is the same as the method described below in the section of Examples.

Examples of a method of adjusting the D90 to be in the above-described range include the use of a kneader, a two-roll mill, a three-roll mill, a planetary mixer, a ball mill, a horizontal sand mill, a vertical sand mill, an annular bead mill, an attritor, a high-shear mixer, a disperser, a FILMIX, an ultrasonic or high-pressure homogenizer, or the like.

(1.6) Preferred Compositions

With regard to the content ratio of the above-described conductive carbon material (A), olefin resin (B), and acrylic water-soluble polymer (C), from the standpoint of effective exertion of the shutdown function and retention of the battery performance, it is preferred that: the content of the conductive carbon material (A) is from 1% by mass to 30% by mass with respect to the total amount of the composition; the content of the olefin resin (B) is from 30% by mass to 90% by mass with respect to the total amount of the composition; and the content of the acrylic water-soluble polymer (C) is from 1% by mass to 20% by mass with respect to the total amount of the composition.

(1.6.1) Preferred Composition (i)

The composition of the disclosure preferably satisfies the below-described requirement (a1) in addition to the above-described configuration. This leads to excellent adhesion between the conductive carbon material (A) and the olefin resin (B), allowing the battery performance to be maintained.

The composition of the disclosure preferably satisfies the below-described requirements (a1) and (a2) in addition to the above-described configuration. This improves the balance between effective exertion of the shutdown function and retention of the battery performance.

The composition of the disclosure preferably satisfies the below-described requirements (a1), (a2), and (a3) in addition to the above-described configuration. This improves the balance between effective exertion of the shutdown function and retention of the battery performance.

The composition of the disclosure preferably satisfies the below-described requirements (a1), (a2), (a3), and (a4) in addition to the above-described configuration. This allows the energy density of a lithium secondary battery to be maintained, and improves the balance between effective exertion of the shutdown function and retention of the battery performance.

The composition of the disclosure preferably satisfies the below-described requirements (a1), (a2), (a3), (a4), and (a5) in addition to the above-described configuration. This not only leads to excellent resistance of an electrode to a high-temperature treatment, but also allows the energy density of a lithium secondary battery to be maintained and improves the balance between effective exertion of the shutdown function and retention of the battery performance.

The composition of the disclosure preferably satisfies the below-described requirements (a1), (a2), (a3), (a4), (a5), and (a6) in addition to the above-described configuration. By this, when the composition of the disclosure is applied to a lithium secondary battery provided with an electrode, a lithium-ion secondary battery having a superior balance between safety and battery performance (i.e., output and service life) can be obtained.

(1.6.1.1) Requirements (a1) to (a6)

Requirement (a1): the content of the structural unit derived from a (meth)acrylamide is from 60% by mass to 85% by mass with respect to the total amount of the acrylic water-soluble polymer (C).

Requirement (a2): the content of the conductive carbon material (A) is from 10% by mass to 20% by mass with respect to the total amount of the composition.

Requirement (a3): the content of the olefin resin (B) is from 60% by mass to 80% by mass with respect to the total amount of the composition.

Requirement (a4): the particle size of the olefin resin (B) is from 1 $\mu$m to 3 $\mu$m.

Requirement (a5): the softening point of the olefin resin (B) is 120°C or higher.

Requirement (a6): the composition of the disclosure further contains an additive (D), and the additive (D) contains CMC.

(1.6.2) Preferred Composition (ii)

The composition of the disclosure preferably satisfies the below-described requirement (b1) in addition to the above-described configuration. This leads to excellent adhesion between the conductive carbon material (A) and the olefin resin (B), allowing the battery performance to be maintained.

The composition of the disclosure preferably satisfies the below-described requirements (b1) and (b2) in addition to the above-described configuration. This improves the balance between effective exertion of the shutdown function and retention of the battery performance.

The composition of the disclosure preferably satisfies the below-described requirements (b1), (b2), and (b3) in addition to the above-described configuration. This improves the balance between effective exertion of the shutdown function and retention of the battery performance.

The composition of the disclosure preferably satisfies the below-described requirements (b1), (b2), (b3), and (b4) in addition to the above-described configuration. This allows the energy density of a lithium secondary battery to be maintained, and improves the balance between effective exertion of the shutdown function and retention of the battery performance.

The composition of the disclosure preferably satisfies the below-described requirements (b1), (b2), (b3), (b4), and (b5) in addition to the above-described configuration. This not only leads to excellent resistance of an electrode to a high-temperature treatment, but also allows the energy density of a lithium secondary battery to be maintained and improves the balance between effective exertion of the shutdown function and retention of the battery performance.

The composition of the disclosure preferably satisfies the below-described requirements (b1), (b2), (b3), (b4), (b5), and (b6) in addition to the above-described configuration. By this, when the composition of the disclosure is applied to a lithium secondary battery provided with an electrode, a lithium-ion secondary battery having a particularly excellent balance between safety and battery performance (i.e., output and service life) can be obtained.

(1.6.2.1) Requirements (b1) to (b6)

Requirement (b1): the content of the structural unit derived from a (meth)acrylamide is from 60% by mass to 85% by mass with respect to the total amount of the acrylic water-soluble polymer (C).

Requirement (b2): the content of the conductive carbon material (A) is from 10% by mass to 20% by mass with respect to the total amount of the composition.

Requirement (b3): the content of the olefin resin (B) is from 70% by mass to 80% by mass with respect to the total amount of the composition.

Requirement (b4): the particle size of the olefin resin (B) is from 1 $\mu$m to 2 $\mu$m.

Requirement (b5): the softening point of the olefin resin (B) is 120°C or higher.

Requirement (b6): the composition of the disclosure further contains an additive (D), and the additive (D) contains CMC.

(1.7) Composition Production Method

A method of producing the composition of the disclosure preferably includes: mixing the conductive carbon material (A), the olefin resin (B), and the acrylic water-soluble polymer (C) to prepare a mixture (hereinafter, also referred to as "mixing step"); and dispersing the mixture using a dispersion roll (hereinafter, also referred to as "dispersion step"). The mixing step and the dispersion step may be performed in the order mentioned and, in this case, other steps (e.g., the step of kneading the mixture) may be incorporated between the mixing step and the dispersion step.

(1.7.1) Mixing Step

In the mixing step, the conductive carbon material (A), the olefin resin (B), and the acrylic water-soluble polymer (C) are mixed to prepare a mixture. A mixing method is not particularly limited, and any known method may be employed.
The blending amounts of the conductive carbon material (A), the olefin resin (B), and the acrylic water-soluble polymer (C) are the same as the respective ranges described above for conductive carbon material (A), the olefin resin (B), and the acrylic water-soluble polymer (C) in the composition of the disclosure.

(1.7.2) Dispersion Step

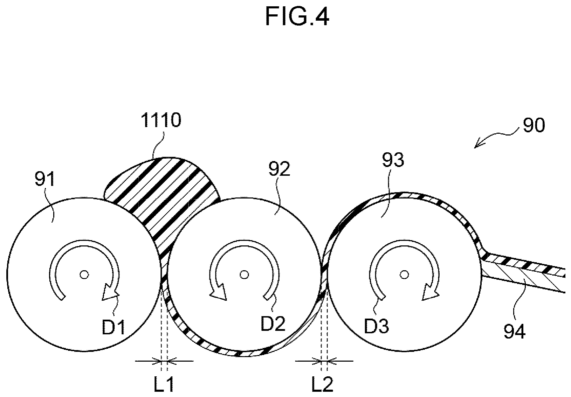

In the dispersion step, the thus obtained mixture is dispersed using a dispersion roll. By this, a composition in which the raw materials are more dispersed than in the mixture prior to the dispersion step is obtained. As a result, when a secondary battery is provided with an electrode to be produced, the resulting composition can not only reduce the charge-discharge initial direct-current resistance but also effectively inhibit an increase in the direct-current resistance in a high-temperature environment, as compared to a case where the dispersion step is not performed.
A treatment of dispersing the mixture using a dispersion roll is hereinafter also referred to as "dispersion treatment". The mixture may be kneaded in advance before the dispersion treatment.
A dispersion method is not particularly limited and, for example, a method using a kneading device may be employed. Examples of the kneading device include a kneader, a two-roll mill, a three-roll mill, a planetary mixer, a ball mill, a horizontal sand mill, a vertical sand mill, an annular bead mill, an attritor, a high-shear mixer, a disperser, a FILMIX, and an ultrasonic or high-pressure homogenizer. Thereamong, from the standpoint of more uniformly dispersing the fine particles in the mixture, the kneading device is preferably a three-roll mill.
When a kneading device is used, a method of dispersing the mixture may be, for example, batch dispersion, pass dispersion, or circulation dispersion. Two or more of these methods may be employed in combination as the method of dispersing the mixture. The "batch dispersion" refers to a method of dispersing the mixture using only a kneading device without a pipe or the like. The "pass dispersion" refers to a method of dispersing the mixture by passing the mixture through a kneading device using a kneading system. The kneading system includes a kneading device, a first tank that supplies the mixture to the kneading device through piping, and a second tank that receives the mixture after a kneading process. The "circulation dispersion" refers to a method of dispersing the mixture with circulation by returning the mixture after a kneading process in the second tank to the first tank.
A three-roll mill will now be described referring to FIG. 4. In FIG. 4, a symbol D1 indicates the rotation direction of a first roll 91 (hereinafter, also referred to as "feed roll 91"); a symbol D2 indicates the rotation direction of a second roll 92 (hereinafter, also referred to as "intermediate roll 92"); and a symbol D3 indicates the rotation direction of a third roll 93 (hereinafter, also referred to as "finishing roll 93").
As illustrated in FIG. 4, a three-roll mill 90 includes the feed roll 91, the intermediate roll 92, the finishing roll 93, and a blade 94. The feed roll 91 and the intermediate roll 92 are arranged with a first gap L1 (see FIG. 4) therebetween. The intermediate roll 92 and the finishing roll 93 are arranged with a second gap L2 (see FIG. 4) therebetween. The blade 94 is arranged in contact with the surface of the finishing roll 93.
In the three-roll mill 90, as illustrated in FIG. 4, a mixture 1110 is stored in an upper space formed by the feed roll 91 and the intermediate roll 92. The mixture 1110 adhering to the surface of the feed roll 91 is transferred to the surface of the intermediate roll 92. The mixture 1110 adhering to the surface of the intermediate roll 92 is transferred to the surface of the finishing roll 93. The mixture 1110 adhering to the surface of the finishing roll 93 is scraped off by the blade 94.
The feed roll 91, the intermediate roll 92, and the finishing roll 93 may each be a roll that is used in a known three-roll mill. The feed roll 91, the intermediate roll 92, and the finishing roll 93 have substantially the same diameter. The blade 94 may be, for example, a doctor blade.
The rotation speeds of the feed roll 91, the intermediate roll 92, and the finishing roll 93 are not particularly limited, and may be faster in the order of the feed roll 91, the intermediate roll 92, and the finishing roll 93.
The rotation speed of the feed roll 91 is not particularly limited, and it is preferably from 5 rpm (revolutions per minute) to 84 rpm, more preferably from 16 rpm to 56 rpm. The rotation speed of the intermediate roll 92 is not particularly limited, and it is preferably from 16 rpm to 240 rpm, more preferably from 50 rpm to 160 rpm. The rotation speed of the finishing roll 93 is not particularly limited, and it is preferably 50 rpm to 600 rpm, more preferably from 150 rpm to 400 rpm.

From the standpoint of uniformly dispersing fine particles in the mixture, a ratio of the rotation speed of the intermediate roll 92 with respect to the rotation speed of the feed roll 91 (rotation speed of intermediate roll 92/rotation speed of feed roll 91) is preferably from 2.0 to 4.0, more preferably from 2.5 to 3.5.

From the standpoint of uniformly dispersing fine particles in the mixture, a ratio of the rotation speed of the finishing roll 93 with respect to the rotation speed of the feed roll 91 (rotation speed of finishing roll 93/rotation speed of feed roll 91) is preferably from 5.0 to 12.0, more preferably from 6.5 to 10.0.

The first gap L1 is not particularly limited and, from the standpoint of uniformly dispersing fine particles in the mixture, it is preferably from 0 mm to 0.05 mm, more preferably from 0 mm to 0.02 mm.

The second gap L2 is not particularly limited and, from the standpoint of uniformly dispersing fine particles in the mixture, it is preferably from 0 mm to 0.05 mm, more preferably from 0 mm to 0.02 mm.

The number of dispersion treatments (hereinafter, also referred to as "number of treatments") may be one or more. Particularly, the number of treatments is preferably three. When the number of treatments is three, the conductive carbon material (A) and the olefin resin (B) in the mixture are more likely to be uniformly dispersed as compared to a case where the number of treatments is two or less, or four or more. As a result, a composition that enables the production of a lithium-ion secondary battery in which an increase in the charge-discharge initial direct-current resistance and the direct-current resistance in a high-temperature environment (particularly after long-term storage) is more effectively inhibited can be obtained.

(2) Undercoat

The undercoat layer of the disclosure contains the above-described composition of the disclosure. Since the composition of the disclosure is as described above, description thereof is omitted here.

The thickness of the undercoat layer is not particularly limited. From the standpoint of, for example, further reducing the direct-current resistance of a lithium-ion secondary battery in a normal condition, the thickness of the undercoat layer is preferably 50 $\mu$m or less, more preferably 20 $\mu$m or less. From the standpoint of further increasing the direct-current resistance of a lithium-ion secondary battery in the event of abnormal heat generation to allow the shutdown function to be exerted more reliably, the thickness of the undercoat layer is preferably 0.1 $\mu$m or more, more preferably 0.2 $\mu$m or more.

The position where the undercoat layer is formed is preferably at least a portion of at least one of the main surfaces of a positive electrode current collector, and may be selected as appropriate in accordance with the coating pattern and the like of a positive electrode mixture layer (e.g., intermittent coating or stripe coating).

(3) Electrode

The electrode of the disclosure includes a current collector, the above-described undercoat layer of the disclosure, and a mixture layer. The term "electrode" used herein refers to at least one of a positive electrode or a negative electrode of a lithium-ion secondary battery.

The electrode of the disclosure has the above-described configuration; therefore, it enables the production of a lithium-ion secondary battery excellent in safety, in which an increase in the direct-current resistance is inhibited both in the initial stage of charging and discharging and in a high-temperature environment (particularly after long-term storage).

In the electrode of the disclosure, it is preferred that the current collector, the undercoat layer, and the mixture layer are layered in this order. By this, in the electrode of the disclosure, the electrical resistance between the current collector and the mixture layer is increased in the event of a rapid increase in the temperature of a lithium-ion secondary battery. This prevents the lithium-ion secondary battery from overheating. Therefore, the electrode of the disclosure can improve the safety of the lithium-ion secondary battery. Further, the electrode of the disclosure can inhibit an increase in the direct-current resistance in the lithium-ion secondary battery even when the lithium-ion secondary battery is stored for an extended period in a high-temperature environment.

The electrode of the disclosure may be a positive electrode or a negative electrode. Particularly, the electrode of the disclosure is preferably a positive electrode. When the electrode of the disclosure is a positive electrode, an increase in the electrical resistance of the positive electrode allows the resulting lithium-ion secondary battery to exert a shutdown function in a favorable manner.

(3.1) Positive Electrode

The positive electrode of the disclosure may include a current collector (hereinafter, also referred to as "positive electrode current collector"), the undercoat layer, a mixture layer (hereinafter, also referred to as "positive electrode mixture layer").

The positive electrode of the disclosure encompasses a first positive electrode configuration, a second positive electrode configuration, a third positive electrode configuration, and a fourth positive electrode configuration.

The first positive electrode configuration refers to a configuration in which the undercoat layer and the positive electrode mixture layer are layered in this order on both main surfaces of the current collector.

The second positive electrode configuration refers to a configuration in which the undercoat layer and the positive electrode mixture layer are layered in this order on one of the main surfaces of the current collector, and the undercoat layer is disposed on the other main surface of the current collector.

The third positive electrode configuration refers to a configuration in which the undercoat layer and the positive electrode mixture layer are layered in this order on one of the main surfaces of the current collector, and the positive electrode mixture layer is disposed on the other main surface of the current collector.

The fourth positive electrode configuration refers to a configuration in which the undercoat layer and the positive electrode mixture layer are layered in this order on one of the main surfaces of the current collector, and neither the undercoat layer nor the positive electrode mixture layer is disposed on the other main surface of the current collector.

(3.1.1) Positive Electrode Current Collector

Examples of the material of the positive electrode current collector include aluminum, nickel, stainless steel (SUS), and copper. The term "aluminum" used herein encompasses pure aluminum and aluminum alloys.

(3.1.2) Undercoat Layer

The details of the undercoat layer and the composition constituting the same have been described above; therefore, description thereof is omitted here.

(3.1.3) Positive Electrode Mixture Layer

The positive electrode mixture layer contains a positive electrode active material and a binder.

(3.1.3.1) Positive Electrode Active Material

The positive electrode active material is not particularly limited as long as it is a substance capable of occluding and releasing lithium ions, and may be adjusted as appropriate in accordance with the intended use and the like of the lithium-ion secondary battery.

Examples of the positive electrode active material include a first oxide and a second oxide.

The first oxide contains lithium (Li) and nickel (Ni) as constituent metal elements.

The second oxide contains Li, Ni, and at least one metal element other than Li and Ni as constituent metal elements. Examples of the metal element other than Li and Ni include transition metal elements and main-group metal elements. The second oxide contains the metal element other than Li and Ni preferably at a ratio equivalent to or lower than that of Ni in terms of the number of atoms. The metal element other than Li and Ni may be, for example, at least one selected from the group consisting of Co, Mn, Al, Cr, Fe, V, Mg, Ca, Na, Ti, Zr, Nb, Mo, W, Cu, Zn, Ga, In, Sn, La, and Ce. These positive electrode active materials may be used singly, or in combination of two or more kinds thereof.

The positive electrode active material preferably contains a lithium-containing composite oxide represented by the following Formula (X) (hereinafter, may be referred to as "NCM"). The lithium-containing composite oxide (X) is advantageous in that it has a high energy density per unit volume and excellent thermal stability.

$$LiNi_aCo_bMn_cO_2 \qquad (X)$$

In Formula (X), each of a, b, and c independently represents a number larger than 0 but smaller than 1, and a sum of a, b, and c is from 0.99 to 1.00.

Specific examples of the NCM include $LiNi_{0.33}Co_{0.33}Mn_{0.33}O_2$, $LiNi_{0.5}Co_{0.3}Mn_{0.2}O_2$, $LiNi_{0.5}Co_{0.2}Mn_{0.3}O_2$, $LiNi_{0.6}Co_{0.2}Mn_{0.2}O_2$, and $LiNi_{0.8}Co_{0.1}Mn_{0.1}O_2$.

The positive electrode active material may also contain a lithium-containing composite oxide represented by the following Formula (Y) (hereinafter, may be referred to as "NCA").

$$Li_tNi_{1-x-y}Co_xAl_yO_2 \qquad (Y)$$

In Formula (Y), t represents a number of from 0.95 to 1.15, x represents a number of from 0 to 0.3, y represents a number of from 0.01 to 0.2, and a sum of x and y is less than 0.5.

Specific example of the NCA include $LiNi_{0.8}Co_{0.15}Al_{0.05}O_2$.

A content of the positive electrode active material is preferably 10% by mass or more, more preferably 30% by mass or more, still more preferably 50% by mass or more, particularly preferably 70% by mass or more, with respect to a total amount of the positive electrode mixture layer.

The content of the positive electrode active material is preferably 99.9% by mass or less, more preferably 99% by mass or less, with respect to the total amount of the positive electrode mixture layer.

(3.1.3.2) Binder

Examples of the binder include polyvinyl acetate, polymethyl methacrylate, nitrocellulose, fluorine resins, and rubber particles.

Examples of the fluorine resins include polytetrafluoroethylenes (PTFE), polyvinylidene fluorides (PVDF), tetrafluoroethylene-hexafluoropropylene copolymers (FEP), and vinylidene fluoride-hexafluoropropylene copolymers.

Examples of the rubber particles include styrene-butadiene rubber particles and acrylonitrile rubber particles.

Thereamong, from the standpoint of improving the oxidation resistance of the positive electrode mixture layer, the binder preferably contains a fluorine resin. The binder may be used singly, or in combination of two or more kinds thereof.

From the standpoint of satisfying both the physical properties of the positive electrode mixture layer (e.g., electrolyte solution permeability and peeling strength) and the battery performance, the content of the binder is preferably from 0.1% by mass to 4% by mass with respect to the total amount of the positive electrode mixture layer.

(3.1.3.3) Conductive Aid

The positive electrode mixture layer may further contain a conductive aid.

As the conductive aid, any known conductive aid can be used. The known conductive aid is preferably a conductive carbon material. Examples of the conductive carbon material include graphites, carbon blacks, conductive carbon fibers, and fullerenes. Examples of the conductive carbon fibers include carbon nanotubes, carbon nanofibers, and carbon fibers. Examples of the graphites include artificial graphite and natural graphite. Examples of the natural graphite include flake graphite, bulk graphite, and earthy graphite. The conductive aid may be used singly, or in combination of two or more kinds thereof. The conductive aid may be a commercially available product.

(3.1.3.4) Other Components

The positive electrode mixture layer may also contain other components. Examples of the other components include a thickening agent, a surfactant, a dispersant, a wetting agent, and an antifoaming agent.

(3.2) Negative Electrode

The negative electrode of the disclosure includes a current collector (hereinafter, also referred to as "negative electrode current collector") and a mixture layer (hereinafter, also referred to as "negative electrode mixture layer"), and may also include an undercoat layer.

The negative electrode of the disclosure may encompass a first negative electrode configuration, a second negative electrode configuration, a third negative electrode configuration, and a fourth negative electrode configuration.

The first negative electrode configuration refers to a configuration in which the undercoat layer and the negative electrode mixture layer are layered in this order on both main surfaces of the current collector.

The second negative electrode configuration refers to a configuration in which the undercoat layer and the negative electrode mixture layer are layered in this order on one of the main surfaces of the current collector, and the undercoat layer is disposed on the other main surface of the current collector.

The third negative electrode configuration refers to a configuration in which the undercoat layer and the negative electrode mixture layer are layered in this order on one of the main surfaces of the current collector, and the negative electrode mixture layer is disposed on the other main surface of the current collector.

The fourth negative electrode configuration refers to a configuration in which the undercoat layer and the negative electrode mixture layer are layered in this order on one of the main surfaces of the current collector, and neither the undercoat layer nor the negative electrode mixture layer is disposed on the other main surface of the current collector.

(3.2.1) Negative Electrode Current Collector

Examples of the material of the negative electrode current collector include copper, aluminum, nickel, stainless steel (SUS), and nickel-plated steel.

(3.2.2) Undercoat Layer

The undercoat layer is the same as the one exemplified above as the undercoat layer of the positive electrode.

(3.2.3) Negative Electrode Mixture Layer

The negative electrode mixture layer contains a negative electrode active material and a binder.

(3.2.3.1) Negative Electrode Active Material

The negative electrode active material is not particularly limited as long as it is a substance capable of occluding and releasing lithium ions. The negative electrode active material is preferably, for example, at least one selected from the group consisting of metal lithium, lithium-containing alloys, metals and alloys that can be alloyed with lithium, oxides capable of doping and dedoping lithium ions, transition metal nitrides capable of doping and dedoping lithium ions, and carbon materials capable of doping and dedoping lithium ions. Thereamong, the negative electrode active material is preferably a carbon material capable of doping and dedoping lithium ions (hereinafter, referred to as "carbon material").
Examples of the carbon material include carbon black, activated charcoal, graphite materials, and amorphous carbon materials. These carbon materials may be used singly, or in combination of two or more kinds thereof as a mixture. The form of the carbon material is not particularly limited and may be, for example, a fibrous form, a spherical form, a potato-like form, or a flake form. The particle size of the carbon material is also not particularly limited, and it is preferably from 5 $\mu$m to 50 $\mu$m, more preferably from 20 $\mu$m to 30 $\mu$m.
Examples of the amorphous carbon materials include hard carbon, cokes, mesocarbon microbeads (MCMB) calcined at 1,500°C or lower, and mesophase pitch carbon fibers (MCF).
Examples of the graphite materials include natural graphite and artificial graphite. Examples of the artificial graphite include graphitized MCMB and graphitized MCF. The graphite materials may contain boron. The graphite materials may be coated with a metal or amorphous carbon as well. Examples of the metal used for coating the graphite materials include gold, platinum, silver, copper, and tin. The graphite materials may be mixtures of amorphous carbon and graphite.

(3.2.3.2) Binder

Examples of the binder contained in the negative electrode mixture layer include the same ones as those exemplified above as the binder contained in the positive electrode mixture layer.
The binder contained in the negative electrode mixture layer may be the same as or different from the binder contained in the positive electrode mixture layer.
A content of the binder in the negative electrode mixture layer is not particularly limited, and may be the same as the above-exemplified content of the binder contained in the positive electrode mixture layer.

(3.2.3.3) Conductive Aid

The negative electrode mixture layer preferably contains a conductive aid. Examples of the conductive aid include the same ones as those exemplified above as the conductive aid that may be contained in the positive electrode mixture layer.

(3.2.3.4) Other Components

The negative electrode mixture layer may also contain other components in addition to the above-described components. Examples of the other components include a thickening agent, a surfactant, a dispersant, a wetting agent, and an antifoaming agent.
**In** the electrode of the disclosure, it is preferred that the current collector, the undercoat layer, and the mixture layer are layered in this order.

(4) Lithium-Ion Secondary Battery

The lithium-ion secondary battery of the disclosure includes the above-described electrode of the disclosure.
A lithium-ion secondary battery generally includes an outer package, electrodes (positive electrode and negative electrode), a separator, and an electrolyte solution. The outer package houses the electrodes (positive electrode and negative electrode), the separator, and the nonaqueous electrolyte solution.

A case where the positive electrode and the negative electrode are both the electrode of the disclosure will now be described as an example.

## (4.1) Outer Package

The outer package is, for example, an outer package that includes a laminated film, or an outer package composed of a battery can and a battery can lid.

The shape and the like of the outer package are not particularly limited, and are selected as appropriate in accordance with the intended use and the like of the lithium-ion secondary battery.

## (4.2) Electrodes

The lithium-ion secondary battery of the disclosure includes a positive electrode and a negative electrode as electrodes. The positive electrode is capable of occluding and releasing lithium ions. The negative electrode is also capable of occluding and releasing lithium ions.

In the lithium-ion secondary battery of the disclosure, at least one of the positive electrode or the negative electrode is the electrode of the disclosure. When at least one of the positive electrode or the negative electrode in the lithium-ion secondary battery of the disclosure is the electrode of the disclosure, the other of the positive electrode or the negative electrode may be any known electrode used in a lithium-ion secondary battery.

## (4.3) Separator

The separator separates the positive electrode and the negative electrode from each other. The separator is, for example, a porous resin plate. Examples of the material of the porous resin plate include resins and nonwoven fabrics containing the resins. Examples of the resins include polyethylene (PE), polypropylene (PP), polymethylpentene (PMP), polyester, cellulose, and polyamide. Particularly, the separator is preferably a porous resin sheet having a monolayer or multilayer structure. The material of the porous resin sheet is mainly composed of one or more kinds of polyolefin resins. The thickness of the separator is preferably from 5 $\mu$m to 30 $\mu$m. The separator is preferably arranged between the positive electrode and the negative electrode.

## (4.4) Nonaqueous Electrolyte Solution

The nonaqueous electrolyte solution contains an electrolyte and a nonaqueous solvent.

## (4.4.1) Electrolyte

The electrolyte preferably contains at least one of a lithium salt containing fluorine (hereinafter, also referred to as "fluorine-containing lithium salt") or a lithium salt not containing fluorine.

Examples of the fluorine-containing lithium salt include inorganic acid anion salts and organic acid anion salts.

Examples of the inorganic acid anion salts include lithium hexafluorophosphate ($LiPF_6$), lithium tetrafluoroborate ($LiBF_4$), lithium hexafluoroarsenate ($LiAsF_6$), and lithium hexafluorotantalate ($LiTaF_6$). Examples of the organic acid anion salts include lithium trifluoromethane sulfonate ($LiCF_3SO_3$). Thereamong, the fluorine-containing lithium salt is particularly preferably $LiPF_6$. Examples of the lithium salt not containing fluorine include lithium perchlorate ($LiClO_4$), lithium tetrachloroaluminate ($LiAlCl_4$), and lithium decachlorodecaborate ($Li_2B_{10}Cl_{10}$).

When the electrolyte contains a fluorine-containing lithium salt, the content ratio of the fluorine-containing lithium salt is preferably from 50% by mass to 100% by mass, more preferably from 60% by mass to 100% by mass, still more preferably from 80% by mass to 100% by mass, with respect to a total amount of the electrolyte.

When the fluorine-containing lithium salt contains lithium hexafluorophosphate ($LiPF_6$), a content ratio of lithium hexafluorophosphate ($LiPF_6$) is preferably from 50% by mass to 100% by mass, more preferably from 60% by mass to 100% by mass, still more preferably from 80% by mass to 100% by mass, with respect to the total amount of the electrolyte.

When the nonaqueous electrolyte solution contains an electrolyte, the concentration of the electrolyte in the nonaqueous electrolyte solution is preferably from 0.1 mol/L to 3 mol/L, more preferably from 0.5 mol/L to 2 mol/L.

When the nonaqueous electrolyte solution contains lithium hexafluorophosphate ($LiPF_6$), the concentration of lithium hexafluorophosphate ($LiPF_6$) in the nonaqueous electrolyte solution is preferably from 0.1 mol/L to 3 mol/L, more preferably from 0.5 mol/L to 2 mol/L.

(4.4.2) Nonaqueous Solvent

The nonaqueous electrolyte solution generally contains a nonaqueous solvent.

Examples of the nonaqueous solvent include cyclic carbonates, fluorine-containing cyclic carbonates, chain carbonates, fluorine-containing chain carbonates, aliphatic carboxylic acid esters, fluorine-containing aliphatic carboxylic acid esters, $\gamma$-lactones, fluorine-containing $\gamma$-lactones, cyclic ethers, fluorine-containing cyclic ethers, chain ethers, fluorine-containing chain ethers, nitriles, amides, lactams, nitromethane, nitroethane, sulfolane, trimethyl phosphate, dimethyl sulfoxide, and dimethyl sulfoxide phosphate. These nonaqueous solvents may be used singly, or in combination of two or more kinds thereof.

Examples of the cyclic carbonates include ethylene carbonate (EC), propylene carbonate (PC), and butylene carbonate (BC).

Examples of the fluorine-containing cyclic carbonates include fluoroethylene carbonate (FEC), difluoroethylene carbonate (DFEC), and trifluoropropylene carbonate.

Examples of the chain carbonates include dimethyl carbonate (DMC), diethyl carbonate (DEC), ethyl methyl carbonate (EMC), methyl propyl carbonate (MPC), ethyl propyl carbonate (EPC), and dipropyl carbonate (DPC).

Examples of the fluorine-containing chain carbonates include methyl-2,2,2-trifluoroethylcarbonate.

Examples of the aliphatic carboxylic acid esters include methyl formate, methyl acetate, methyl propionate, methyl butyrate, methyl isobutyrate, methyl trimethylbutyrate, ethyl formate, ethyl acetate, ethyl propionate, ethyl butyrate, ethyl isobutyrate, and ethyl trimethylbutyrate.

Examples of the fluorine-containing aliphatic carboxylic acid esters include methyl difluoroacetate, methyl 3,3,3-trifluoropropionate, ethyl difluoroacetate, and 2,2,2-trifluoroethyl acetate.

Examples of the $\gamma$-lactones include $\gamma$-butyrolactone and $\gamma$-valerolactone.

Examples of the cyclic ethers include tetrahydrofuran, 2-methyltetrahydrofuran, tetrahydropyran, 1,3-dioxolane, 4-methyl-1,3-dioxolane, 1,3-dioxane, and 1,4-dioxane.

Examples of the chain ethers include 1,2-ethoxyethane (DEE), ethoxymethoxyethane (EME), diethyl ether, 1,2-dimethoxyethane, and 1,2-dibutoxyethane.

Examples of the fluorine-containing chain ethers include $HCF_2CF_2CH_2OCF_2CF_2H$, $CF_3CF_2CH_2OCF_2CF_2H$, $HCF_2CF_2CH_2OCF_2CFHCF_3$, $CF_3CF_2CH_2OCF_2CFHCF_3$, $C_6F_{13}OCH_3$, $C_6F_{13}OC_2H_5$, $C_8F_{17}OCH_3$, $C_8F_{17}OC_2H_5$, $CF_3CFHCF_2CH(CH_3)OCF_2CFHCF_3$, $HCF_2CF_2OCH(C_2H_5)_2$, $HCF_2CF_2OC_4H_9$, $HCF_2CF_2OCH_2CH(C_2H_5)_2$, and $HCF_2CF_2OCH_2CH(CH_3)_2$.

Examples of the nitriles include acetonitrile, glutaronitrile, adiponitrile, methoxyacetonitrile, and 3-methoxypropionitrile.

Examples of the amides include *N,N*-dimethylformamide.

Examples of the lactams include *N*-methylpyrrolidinone, *N*-methyloxazolidinone, and *N,N'*-dimethylimidazolidinone.

The nonaqueous solvent preferably contains at least one selected from the group consisting of cyclic carbonates, fluorine-containing cyclic carbonates, chain carbonates, and fluorine-containing chain carbonates. In this case, a total ratio of the cyclic carbonates, the fluorine-containing cyclic carbonates, the chain carbonates, and the fluorine-containing chain carbonates is preferably from 50% by mass to 100% by mass, more preferably from 60% by mass to 100% by mass, still more preferably from 80% by mass to 100% by mass, with respect to a total amount of the nonaqueous solvent.

The nonaqueous solvent preferably contains at least one selected from the group consisting of cyclic carbonates and chain carbonates. In this case, a total ratio of the cyclic carbonates and the chain carbonates in the nonaqueous solvent is preferably from 50% by mass to 100% by mass, more preferably from 60% by mass to 100% by mass, still more preferably from 80% by mass to 100% by mass, with respect to a total amount of the nonaqueous solvent.

A content of the nonaqueous solvent is preferably 99% by mass or less, preferably 97% by mass or less, still more preferably 90% by mass or less, with respect to the total amount of the nonaqueous electrolyte solution. The content of the nonaqueous solvent is preferably 60% by mass or more, more preferably 70% by mass or more, with respect to the total amount of the nonaqueous electrolyte solution.

From the standpoint of further improving the dissociation of the electrolyte and the ion mobility, the nonaqueous solvent preferably has an intrinsic viscosity of 10.0 mPa·s or less at 25°C.

(4.4.3) Electrolyte Solution Additive

The nonaqueous solvent may also contain an electrolyte solution additive. By this, in a charge-discharge cycle of the lithium-ion secondary battery a side reaction that is not a natural battery reaction can be made unlikely to proceed. The "battery reaction" refers to a reaction that causes lithium ions to move in and out of the positive electrode and the negative electrode (intercalation). Examples of the side reaction include: a reductive decomposition reaction of the nonaqueous electrolyte solution by the negative electrode; an oxidative decomposition reaction of the nonaqueous electrolyte solution by the positive electrode; and elution of a metal element contained in the positive electrode active material.

The electrolyte solution additive is not particularly limited, and any known electrolyte solution additive, for example, any of the additives disclosed in Japanese Patent Application Laid-Open (JP-A) No. 2019-153443, can be used as desired.

(5) One Example of Lithium-Ion Secondary Battery

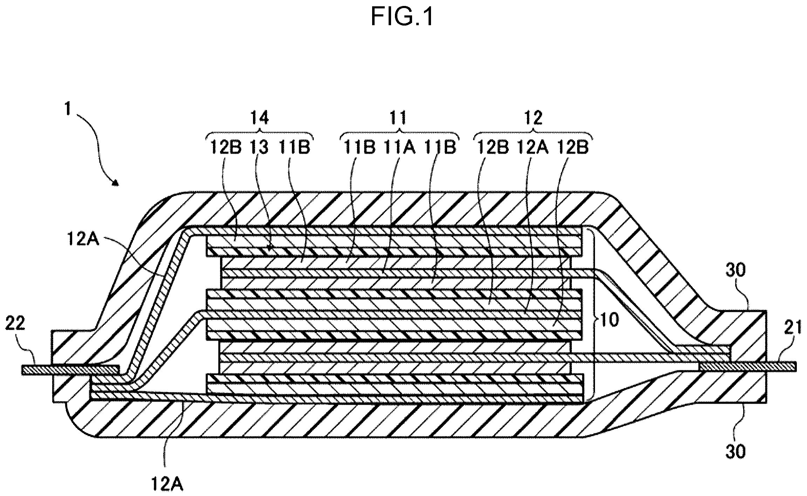

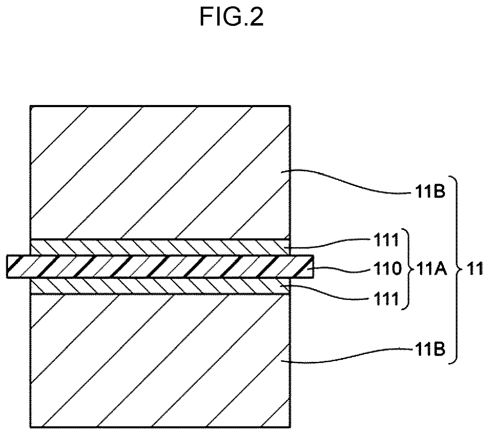

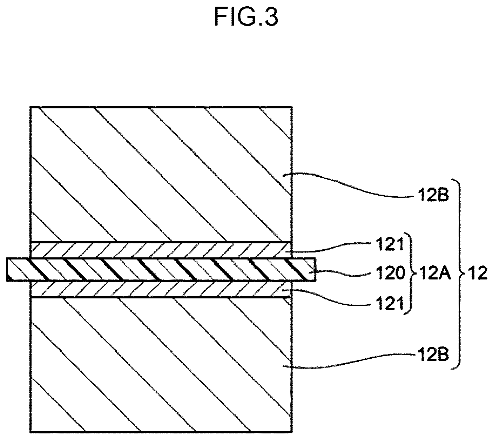

One example of the lithium-ion secondary battery according to one embodiment of the disclosure will now be concretely described referring to FIGs. 1 and 2. FIG. 1 is a schematic cross-sectional view of a lithium-ion secondary battery 1 according to one embodiment of the disclosure. FIG. 2 is a schematic cross-sectional view of a positive electrode 11 in the lithium-ion secondary battery 1 according to one embodiment of the disclosure. FIG. 3 is a schematic cross-sectional view of a negative electrode 12 in the lithium-ion secondary battery 1 according to one embodiment of the disclosure.

The lithium-ion secondary battery 1 according to one embodiment of the disclosure is of a layered type. As illustrated in FIG. 1, the lithium-ion secondary battery 1 includes a battery element 10, a positive electrode lead 21, a negative electrode lead 22, and an outer package 30. The battery element 10 is enclosed in the outer package 30. The outer package 30 is formed of a laminated film. The positive electrode lead 21 and the negative electrode lead 22 are each attached to the battery element 10. The positive electrode lead 21 and the negative electrode lead 22 are drawn out in the opposite direction to each other from the inside of the outer package 30 to the outside.

In the battery element 10, as illustrated in FIG. 1, the positive electrode 11, a separator 13, and the negative electrode 12 are layered.

In the positive electrode 11, as illustrated in FIG. 2, a positive electrode mixture layer 11B is formed on both main surfaces of an undercoat layer-equipped positive electrode current collector 11A. In the undercoat layer-equipped positive electrode current collector 11A, an undercoat layer 111 is formed on both main surfaces of a positive electrode current collector 110.

In the negative electrode 12, as illustrated in FIG. 3, a negative electrode mixture layer 12B is formed on both main surfaces of an undercoat layer-equipped negative electrode current collector 12A. In the undercoat layer-equipped negative electrode current collector 12A, an undercoat layer 121 is formed on both main surfaces of a negative electrode current collector 120.

As illustrated in FIG. 1, the positive electrode mixture layer 11B formed on one of the main surfaces of the undercoat layer-equipped positive electrode current collector 11A of the positive electrode 11 and the negative electrode mixture layer 12B formed on one of the main surfaces of the undercoat layer-equipped negative electrode current collector 12A of the negative electrode 12 adjacent to the positive electrode 11 face each other via the separator 13.

Inside the outer package 30, a nonaqueous electrolyte solution is injected. The nonaqueous electrolyte solution is impregnated into the positive electrode mixture layer 11B, the separator 13, and the negative electrode mixture layer 12B. In the lithium-ion secondary battery 1, a single unit cell layer 14 is formed by the positive electrode mixture layer 11B, the separator 13, and the negative electrode mixture layer 12B that are adjacent to one another.

In the present embodiment, the lithium-ion secondary battery 1 is of a layered type; however, the disclosure is not limited thereto, and the lithium-ion secondary battery 1 may be of, for example, a wound type. The lithium-ion secondary battery 1 of a wound type is obtained by disposing the positive electrode, the separator, the negative electrode, and the separator on one another in this order, and winding the resultant in a layered form. The wound type encompasses a cylindrical shape and a prismatic shape.

In the present embodiment, as illustrated in FIG. 1, the directions in which the positive electrode lead 21 and the negative electrode lead 22 each protrude from the inside of the outer package 30 to the outside are opposite to each other with respect to the outer package 30; however, the disclosure is not limited to this mode. For example, the directions in which the positive electrode lead and the negative electrode lead each protrude from the inside of the outer package 30 to the outside may be the same with respect to the outer package 30.

EXAMPLES

Embodiments of the disclosure will now be described in detail referring to Examples. It is noted here, however, that the disclosure is not limited to the below-described Examples by any means.

[1] Preparation

Products used in Examples and Comparative Examples are as follows. The physical properties of each product are catalog values.

Conductive Carbon Material (A)

- SUPER-P: "SUPER-P" manufactured by Timcal Ltd. (conductive carbon, solid concentration: 100% by mass)
- KS-6: "KS-6" manufactured by TIMREX (flake graphite, solid concentration: 100% by mass)

Olefin Resin (B)

- W300: "CHEMIPEARL (registered trademark) W300" manufactured by Mitsui Chemicals, Inc. (aqueous dispersion of low-molecular-weight polyethylene, solid concentration: 40% by mass, particle size (average primary particle size measured by a Coulter counter method; the same applies below): 3.0 $\mu$m, softening point (ring-and-ball method): 132°C)
- W700: "CHEMIPEARL (registered trademark) W700" manufactured by Mitsui Chemicals, Inc. (aqueous dispersion of low-molecular-weight polyethylene, solid concentration: 40% by mass, particle size: 1.0 $\mu$m, softening point (ring-and-ball method): 132°C)
- W900: "CHEMIPEARL (registered trademark) W900" manufactured by Mitsui Chemicals, Inc. (aqueous dispersion of low-molecular-weight polyethylene, solid concentration: 40% by mass, particle size: 0.6 $\mu$m, softening point (ring-and-ball method): 132°C)
- W950: "CHEMIPEARL (registered trademark) W950" manufactured by Mitsui Chemicals, Inc. (aqueous dispersion of low-molecular-weight polyethylene, solid concentration: 40% by mass, particle size: 0.6 $\mu$m, softening point (ring-and-ball method): 113°C)
- WP100: "CHEMIPEARL (registered trademark) WP100" manufactured by Mitsui Chemicals, Inc. (aqueous dispersion of low-molecular-weight polypropylene, solid concentration: 40% by mass, particle size: 1.0 $\mu$m, softening point (ring-and-ball method): 148°C)

Acrylic Water-Soluble Polymer (C)

As the acrylic water-soluble polymer (C), acrylic water-soluble polymers (C-1) to (C-5') were each prepared as described below.

[1.3.1] Acrylic Water-Soluble Polymer (C-1)

After adding 240.0 parts by mass of distilled water to a separable flask equipped with a stirrer and a reflux condenser, the separable flask was purged with nitrogen gas and then heated to 70°C. Subsequently, 0.6 parts by mass of ammonium persulfate was added, and the below-described water-soluble monomer raw materials were continuously added over a period of 3 hours, after which the resultant was maintained for another 3 hours, and the pH was adjusted to be 9.0 with aqueous ammonia to complete the polymerization. An appropriate amount of water was added to obtain an aqueous solution of an acrylic water-soluble polymer (C-1). The thus obtained aqueous solution of the acrylic water-soluble polymer (C-1) had a solid content of 15.0%.

<Water-Soluble Monomer Raw Materials>

Methacrylamide: 40.0 parts by mass
Methacrylic acid: 50.0 parts by mass
2-hydroxyethyl methacrylate: 10.0 parts by mass
25% aqueous ammonia: 50.0 parts by mass
Distilled water: 240.0 parts by mass

[1.3.1.2] Glass Transition Temperature (Tg)

The glass transition temperature (Tg) of the acrylic water-soluble polymer (C-1) contained in the thus obtained aqueous solution was calculated using the following Fox equation (1).

$$\text{Equation (1): } 1/Tg = W1/Tg1 + W2/Tg2 + \cdots + Wn/Tgn$$

In Equation (1), Tg represents the glass transition temperature (unit: K) of a copolymer; Tgi (i = 1, 2, ⋯ n) represents the glass transition temperature (unit: K) of a monomer i in the formation of a homopolymer; and Wi (i = 1, 2, ⋯ n) represents the mass fraction of the monomer i in all monomers.

[1.3.2] Acrylic Water-Soluble Polymers (C-2) to (C-5')

Aqueous solutions of acrylic water-soluble polymers (C-2) to (C-5') were produced in the same manner as in Example 1, except that the blending formulation was changed as shown in Table 1. For each of the acrylic water-soluble polymers (C-2) to (C-5'), the glass transition temperature was determined in the same manner as in Example 1.

[Table 1]

| Acrylic water-soluble polymer | | C-1 | C-2 | C-3 | C-4' | C-5' |
|---|---|---|---|---|---|---|
| Monomer (parts by mass) | Methacrylamide | 40 | 90 | 79 | 30 | 34 |
| | Methacrylic acid | 50 | 5 | 7 | 70 | 1 |
| | 2-hydroxyethyl methacrylate | 10 | 5 | 14 | - | 65 |
| Other (parts by mass) | Distilled water | 240/240 | 240/240 | 240/240 | 240/240 | 240/240 |
| | Ammonium persulfate | 0.6 | 0.6 | 0.6 | 0.6 | 0.6 |
| | 25% aqueous ammonia | 50 | 6 | 6 | 50 | 1 |
| Glass transition temperature (Tg) (°C) | | 215 | 248 | 222 | 233 | 120 |

In Table 1, "240/240" indicates that 240 parts by mass of distilled water was initially added to the flask, and 240 parts by mass of distilled water was subsequently used for dissolving the monomers.

[1.3.3] Comparative Resins of Acrylic Water-Soluble Polymer (C)

The following resins were prepared as comparative resins of the acrylic water-soluble polymer (C).

- Polyacrylic acid: "POLYACRYLIC ACID" manufactured by FUJIFILM Wako Pure Chemical Corporation (aqueous polyacrylic acid solution, solid concentration: about 25% by mass)
- Polyacrylamide: "POLYACRYLAMIDE" manufactured by FUJIFILM Wako Pure Chemical Corporation (aqueous polyacrylamide solution, solid concentration: about 10% by mass)

Additive (D)

- CMC: "2200" manufactured by Daicel Miraizu Ltd. (sodium carboxymethylcellulose, solid concentration: 100% by mass)
- PVDF: "W#7200" manufactured by Kureha Corporation (vinylidene fluoride resin, solid concentration: 100% by mass)
- SBR: "TRD2001" manufactured by JSR Corporation (aqueous dispersion of styrene-butadiene rubber particles, solid content: 50% by mass)
- MC: "MATSUMOTO MICROSPHERE (registered trademark) FN-100SS" manufactured by Matsumoto Yushi-Seiyaku Co., Ltd. (microcapsule, solid concentration: 100% by mass, maximum volume expansion temperature: from 145 to 155°C, volume expansion start temperature: from 120 to 130°C)
- $Al_2O_3$: "ALUMINUM OXIDE" manufactured by FUJIFILM Wako Pure Chemical Corporation (average particle size: 2 μm, solid concentration: 100% by mass)

The specific numerical values of blending ratios (content ratios), physical properties, parameters, and the like that are used in the following description can be replaced with the upper limit values (numerical values defined as "or less" or "less than") or the lower limit values (numerical values defined as "or more" or "more than") of the corresponding blending ratios (content ratios), physical properties, parameters, and the like that are described above in the section of "Mode for Carrying Out the Invention". In the following description, unless otherwise specified, "part(s)" and "%" are based on mass.

[2] Production of Undercoat Layer-Equipped Positive Electrode Current Collector [2.1] Preparation of Undercoat Layer Slurry

(Example 1)

An undercoat layer slurry was prepared using a 5-L planetary disperser.

A three-roll mill (BR-300HCVIII, manufactured by AIMEX Co., Ltd.) was used for a dispersion treatment of the undercoat layer slurry.

First, 58 parts by mass of "SUPER-P" (A) was preliminary stirred for 5 minutes (preparation step A).

To this "SUPER-P" powder, 229.0 parts by mass of "CMC aqueous solution" (D) was added, and the resultant was mixed for 20 minutes to obtain a first mixed solution (preparation step B). The "CMC aqueous solution" (D) was prepared by adding "CMC" (D) to distilled water such that a content of "CMC" (D) was 1.6% by mass with respect to a total amount of the "CMC aqueous solution" (D).

To the thus obtained first mixed solution, 527.8 parts by mass of the "CMC aqueous solution" (D) was added, and the resultant was mixed for 20 minutes. This addition operation was repeated for a total of three times to obtain a second mixed solution (preparation step C). The total amount of the "CMC aqueous solution" (D) added to the first mixed solution was 1,583.4 parts by mass.

To the thus obtained second mixed solution, 95.4 parts by mass of "acrylic water-soluble polymer (C-1)" (C) and 471.3 parts by mass of "W700" (B) were added, and the resultant was kneaded for 20 minutes and then vacuum-degassed for 30 minutes to obtain a third mixed solution (preparation step D).

A dispersion treatment of the thus obtained third mixed solution was performed twice using the three-roll mill illustrated in FIG. 4 under the conditions of a roll gap of 10 $\mu$m and a roll rotation speed of 300 rpm (gear ratio 1:3:9) (preparation step E). In other words, the rotation speed of the feed roll 91 was 33.3 rpm, the rotation speed of the intermediate roll 92 was 100 rpm, the rotation speed of the finishing roll 93 was 300 rpm, the first gap L1 was 10 $\mu$m, and the second gap L2 was 10 $\mu$m. In this manner, an undercoat layer slurry (composition) having a solid concentration of 12.4% by mass was prepared (preparation step E).

(Examples 2 to 8 and 11 and Comparative Examples 1 to 5)

Undercoat layer slurries (compositions) were prepared in the same manner as in Example 1, except that the added materials and the added amounts in each of the preparation steps A to D were changed as shown in Table 2.

[Table 2]

| | Preparation step A | | Preparation step B | | Preparation step C | | | Preparation step D | | Slurry |
|---|---|---|---|---|---|---|---|---|---|---|
| | Added material | Added amount (parts by mass) | Added material | Added amount (parts by mass) | Added material | Added amount (parts by mass) | Total added amount (parts by mass) | Added material | Added amount (parts by mass) | Solid concentration (% by mass) |
| Example 1 | SUPER-P (A) | 58.0 | CMC aqueous solution (D) | 229.0 | CMC aqueous solution (D) | 527.8 | 1,583.4 | WSP (C-1) | 95.4 | 12.4 |
| | | | | | | | | *W700* (B) | 471.3 | |
| Example 2 | SUPER-P (A) | 58.0 | CMC aqueous solution (D) | 229.0 | CMC aqueous solution (D) | 527.8 | 1,583.4 | WSP (C-2) | 95.4 | 12.4 |
| | | | | | | | | W700 (B) | 471.3 | |
| Example 3 | SUPER-P (A) | 58.0 | CMC aqueous solution (D) | 229.0 | CMC aqueous solution (D) | 527.8 | 1,583.4 | WSP (C-3) | 95.4 | 12.4 |
| | | | | | | | | W700 (B) | 471.3 | |
| Example 4 | SUPER-P (A) | 29.0 | CMC aqueous solution (D) | 229.0 | CMC aqueous solution (D) | 225.8 | 677.4 | WSP (C-3) | 95.4 | 18.2 |
| | | | | | | | | W700 (B) | 580.0 | |
| Example 5 | SUPER-P (A) | 58.0 | CMC aqueous solution (D) | 229.0 | CMC aqueous solution (D) | 527.8 | 1,583.4 | WSP (C-3) | 95.4 | 12.4 |
| | | | | | | | | W300 (B) | 471.3 | |
| Example 6 | SUPER-P (A) | 58.0 | CMC aqueous solution (D) | 229.0 | CMC aqueous solution (D) | 527.8 | 1,583.4 | WSP (C-3) | 95.4 | 12.4 |
| | | | | | | | | W900 (B) | 471.3 | |
| Example 7 | SUPER-P (A) | 58.0 | CMC aqueous solution (D) | 229.0 | CMC aqueous solution (D) | 527.8 | 1,583.4 | WSP (C-3) | 95.4 | 12.4 |
| | | | | | | | | W950 (B) | 471.3 | |

| | Preparation step A | | Preparation step B | | Preparation step C | | | Preparation step D | | Slurry |
|---|---|---|---|---|---|---|---|---|---|---|
| | Added material | Added amount (parts by mass) | Added material | Added amount (parts by mass) | Added material | Added amount (parts by mass) | Total added amount (parts by mass) | Added material | Added amount (parts by mass) | Solid concentration (% by mass) |
| Example 8 | SUPER-P (A) | 58.0 | CMC aqueous solution (D) | 229.0 | CMC aqueous solution (D) | 527.8 | 1,583.4 | WSP (C-3) | 95.4 | 12.4 |
| | | | | | | | | WP100 (B) | 471.3 | |
| Example 11 | SUPER-P (A) | 29.0 | CMC aqueous solution (D) | 229.0 | CMC aqueous solution (D) | 527.8 | 1,583.4 | WSP (C-3) | 95.4 | 12.4% |
| | | | | | | | | *W700* (B) | 543.8 | |
| Comparative Example 1 | SUPER-P (A) | 58.0 | CMC aqueous solution (D) | 229.0 | CMC aqueous solution (D) | 527.8 | 1,583.4 | SBR (D) | 29.0 | 12.8 |
| | | | | | | | | W700 (B) | 471.3 | |
| Comparative Example 2 | SUPER-P (A) | 58.0 | CMC aqueous solution (D) | 229.0 | CMC aqueous solution (D) | 527.8 | 1,583.4 | PA | 58.0 | 12.7 |
| | | | | | | | | W700 (B) | 471.3 | |
| Comparative Example 3 | SUPER-P (A) | 58.0 | CMC aqueous solution (D) | 229.0 | CMC aqueous solution (D) | 527.8 | 1,583.4 | PAA | 145.0 | 12.2 |
| | | | | | | | | W700 (B) | 471.3 | |
| Comparative Example 4 | SUPER-P (A) | 58.0 | CMC aqueous solution (D) | 229.0 | CMC aqueous solution (D) | 527.8 | 1,583.4 | WSP (C-4') | 95.4 | 12.4 |
| | | | | | | | | W700 (B) | 471.3 | |
| Comparative Example 5 | SUPER-P (A) | 58.0 | CMC aqueous solution (D) | 229.0 | CMC aqueous solution (D) | 527.8 | 1,583.4 | WSP (C-5') | 95.4 | 12.4 |
| | | | | | | | | W700 (B) | 471.3 | |

EP 4 668 372 A1

In Table 2, "WSP" represents an acrylic water-soluble polymer; "PA" represents a polyacrylic acid; and "PAA" represents a polyacrylamide.

(Example 9)

An undercoat layer slurry was prepared using a 5-L planetary disperser.

A three-roll mill (BR-300HCVIII, manufactured by AINMX Co., Ltd.) was used for a dispersion treatment of the undercoat layer slurry.

A mixture was obtained by mixing 58 parts by mass of "SUPER-P" (A) and 87.0 parts by mass of "$Al_2O_3$" (D) for 10 minutes (preparation step A).

To the thus obtained mixture, 550.0 parts by mass of "CMC aqueous solution" (D) was added, and the resultant was mixed for 20 minutes to obtain a first mixed solution (preparation step B). The "CMC aqueous solution" (D) was prepared by adding "CMC" (D) to distilled water such that the content of "CMC" (D) was 1.0% by mass with respect to a total amount of the "CMC aqueous solution" (D).

To the thus obtained first mixed solution, 300.0 parts by mass of the "CMC aqueous solution" (D) was added, and the resultant was mixed for 20 minutes. This addition operation was repeated for a total of three times to obtain a second mixed solution (preparation step C). The total amount of the "CMC aqueous solution" (D) added to the first mixed solution was 900.0 parts by mass.

To the thus obtained second mixed solution, 95.4 parts by mass of "acrylic water-soluble polymer (C-3)" (C) and 290.0 parts by mass of "W700" (B) were added, and the resultant was kneaded for 20 minutes and then vacuum-degassed for 30 minutes to obtain a third mixed solution (preparation step D).

A dispersion treatment of the thus obtained third mixed solution was performed twice using the three-roll mill illustrated in FIG. 4 under the conditions of a roll gap of 10 $\mu$m and a roll rotation speed of 300 rpm (gear ratio 1:3:9) (preparation step E). In other words, the rotation speed of the feed roll 91 was 33.3 rpm, the rotation speed of the intermediate roll 92 was 100 rpm, the rotation speed of the finishing roll 93 was 300 rpm, the first gap L1 was 10 $\mu$m, and the second gap L2 was 10 $\mu$m. In this manner, an undercoat layer slurry (composition) having a solid concentration of 14.9% by mass was prepared (preparation step E).

(Example 10)

An undercoat layer slurry (composition) was prepared in the same manner as in Example 9, except that the added materials in the preparation step A were changed as shown in Table 3.

[Table 3]

| | Preparation step A | | Preparation step B | | Preparation step C | | | Preparation step D | | Slurry |
|---|---|---|---|---|---|---|---|---|---|---|
| | Added material | Added amount (parts by mass) | Added material | Added amount (parts by mass) | Added material | Added amount (parts by mass) | Total added amount (parts by mass) | Added material | Added amount (parts by mass) | Solid concentration (% by mass) |
| Example 9 | SUPER-P (A) | 58.0 | CMC aqueous solution (D) | 550.0 | CMC aqueous solution (D) | 300.0 | 900.0 | WSP (C-3) | 95.4 | 14.9 |
| | $Al_2O_3$ (D) | 87.0 | | | | | | W700 (B) | 290.0 | |
| Example 10 | SUPER-P (A) | 58.0 | CMC aqueous solution (D) | 550.0 | CMC aqueous solution (D) | 300.0 | 900.0 | WSP (C-3) | 95.4 | 14.9 |
| | MC (D) | 87.0 | | | | | | W700 (B) | 290.0 | |

In Table 3, "WSP" represents an acrylic water-soluble polymer.

Application and Drying of Undercoat Layer Slurry

Each undercoat layer slurry was applied using a die coater.

The undercoat layer slurry was applied and dried onto one of the main surfaces of an aluminum foil (thickness: 20 $\mu$m, width: 200 mm, positive electrode current collector) such that the post-drying coating thickness was 3 $\mu$m (coating weight was about 0.2 mg/cm$^2$). Subsequently, the undercoat layer slurry was applied and dried onto the other main surface (uncoated surface) of the aluminum foil such that the post-drying coating thickness was 3 $\mu$m in the same manner. In this manner, an aluminum foil roll having main surfaces both coated with an undercoat layer (undercoat layer-equipped positive electrode current collector) was obtained.

[3] Production of Positive Electrode

Preparation of Positive Electrode Mixture Slurry

A positive electrode mixture slurry was prepared using a 5-L planetary disperser.

A mixture for positive electrode was obtained by mixing 1,520 parts by mass of "NCM523" (manufactured by Umicore S.A., composition formula: $LiNi_{0.5}Co_{0.2}Mn_{0.3}O_2$) as a positive electrode active material, 30 parts by mass of "SUPER-P" (conductive carbon, manufactured by Timcal Ltd.) as a conductive aid, and 30 parts by mass of "KS-6" (flake graphite, manufactured by TIMREX) for 10 minutes.

To the thus obtained mixture for positive electrode, 50 parts by mass of "NMP" was added, and the resultant was mixed for 20 minutes to obtain a first mixed solution for positive electrode.

To the thus obtained first mixed solution for positive electrode, 350 parts by mass of "PVDF solution" was added, and the resultant was kneaded for 30 minutes, after which 260 parts by mass of "PVDF solution" was further added and the resultant was kneaded for 15 minutes, and this was followed by a further addition of 220 parts by mass of "PVDF solution" and subsequent 15-minute kneading, whereby a second mixed solution for positive electrode was obtained. The "PVDF solution" was prepared by adding "PVDF" to "NMP" such that a content of "PVDF" was 8% by mass with respect to a total amount of the "PVDF solution".

In order to adjust the viscosity, 80 parts by mass of "NMP" was added to the thus obtained second mixed solution for positive electrode, and the resultant was mixed for 30 minutes and then vacuum-degassed for 30 minutes.

In this manner, a positive electrode mixture slurry having a solid concentration of 65% by mass was prepared.

Application and Drying

The thus obtained positive electrode mixture slurry was applied using a die coater.

The positive electrode mixture slurry was applied and dried onto one of the main surfaces (i.e., undercoat layers) of the undercoat layer-equipped positive electrode current collector (aluminum foil thickness: 20 $\mu$m, thickness of single undercoat layer: 3 $\mu$m, width: 200 mm) such that the mass of the resulting positive electrode mixture layer (post-drying coating film) was 19.0 mg/cm$^2$. Subsequently, the positive electrode mixture slurry was applied and dried onto the other main surface (i.e., undercoat layer) of the undercoat layer-equipped positive electrode current collector in the same manner such that the mass of the resulting positive electrode mixture layer (post-drying coating film) was 19.0 mg/cm$^2$. The thus obtained positive electrode roll coated on both sides (total coating amount on both sides: 38.0 mg/cm$^2$) was dried in a vacuum-drying oven at 130°C for 12 hours.

Pressing

The positive electrode roll was pressed using a 35-ton press machine. The gap (space) between upper and lower rolls was adjusted, and the above-described positive electrode was pressed to a press density of 2.9 $\pm$ 0.05 g/cm$^3$ using a 35-ton press machine.

Slitting

The positive electrode roll was slit such that an area for the positive electrode mixture layer (front surface: 56 mm $\times$ 334 mm, back surface: 56 mm $\times$ 408 mm) and an area for a tab welding margin were obtained, whereby a positive electrode in which undercoat layers were disposed on the aluminum foil was obtained.

[4] Production of Negative Electrode

Preparation of Negative Electrode Mixture Slurry

A negative electrode mixture slurry was prepared using a 5-L planetary disperser.

A mixture for negative electrode was obtained by mixing 1,050 parts by mass of "natural graphite" as a negative electrode active material and 11 parts by mass of "SUPER-P" (conductive carbon, BET specific surface area: 62 m$^2$/g) as a conductive aid for 10 minutes.

To the thus obtained mixture for negative electrode, 450 parts by mass of "CMC aqueous solution" was added, and the resultant was mixed for 20 minutes to obtain a first mixed solution for negative electrode.

To the thus obtained first mixed solution for negative electrode, 150 parts by mass of "CMC aqueous solution" was added, and the resultant was mixed for 30 minutes, after which 293.5 parts by mass of "CMC aqueous solution" was further added and the resultant was mixed for 30 minutes, and this was followed by a further addition of 450 parts by mass of water as a solvent and subsequent 15-minute mixing, whereby a second mixed solution for negative electrode was obtained.

To the thus obtained second mixed solution for negative electrode, 45 parts by mass of "SBR aqueous solution" (manufactured by JSR Corporation, solid concentration: 50% by mass) was added, and the resultant was kneaded for 15 minutes and then vacuum-degassed for 10 minutes.

In this manner, a negative electrode mixture slurry having a solid concentration of 45% by mass was prepared.

Application and Drying

The thus obtained negative electrode mixture slurry was applied using a die coater.

The negative electrode mixture slurry was applied and dried onto one of the main surfaces of a copper foil (thickness: 10 μm, negative electrode current collector) such that the mass of the resulting negative electrode mixture layer (post-drying coating film) was 11.0 mg/cm$^2$. Subsequently, the negative electrode mixture slurry was applied and dried onto the other main surface (uncoated surface) of the copper foil in the same manner such that the mass of the resulting negative electrode mixture layer (post-drying coating film) was 11.0 mg/cm$^2$. The thus obtained negative electrode roll coated on both sides (total coating amount on both sides: 22.0 mg/cm$^2$) was dried in a vacuum-drying oven at 120°C for 12 hours.

Pressing

The negative electrode roll was pressed using a small press machine. The gap (space) between upper and lower rolls was adjusted, and the negative electrode roll was pressed to a press density of 1.45 ± 0.05 g/cm$^3$ using a small press machine.

Slitting

The negative electrode roll was slit such that an area for the negative electrode mixture layer (front surface: 58 mm × 372 mm, back surface: 58 mm × 431 mm) and an area for a tab welding margin were obtained, whereby a negative electrode was obtained.

[5] Production of Wound-Type Battery (Design Capacity: 1 Ah)

Winding

As a separator, a polyethylene porous film (60.5 mm × 450 mm) having a porosity of 45% by volume and a thickness of 25 μm was used.

The above-obtained negative electrode, separator, undercoat layer-equipped positive electrode, and separator were stacked, wound, and then press-molded. Subsequently, using an ultrasonic bonding machine, an aluminum tab was bonded to the margin of the positive electrode on which the undercoat layer was arranged, and a nickel tab was bonded to the margin of the negative electrode. The resultant was sandwiched between laminate films, and three sides were heat-sealed, whereby an outer package having an opening (hereinafter, referred to as "first outer package") was obtained.

Injection of Nonaqueous Electrolyte Solution

A mixed solvent was obtained by mixing ethylene carbonate (EC), ethyl methyl carbonate (EMC), and dimethyl carbonate (DMC) at a volume ratio of EC:EMC:DMC = 3:3:4. In this mixed solvent, LiPF$_6$ was dissolved at a concentration of 1.0 mol/L to prepare a nonaqueous electrolyte solution.

The above-obtained first outer package was dried under reduced pressure in a vacuum dryer at 70°C for 12 hours before injecting thereto the nonaqueous electrolyte solution. After injecting 4.7 ± 0.1 g of the electrolyte solution into the first outer package, the opening of the first outer package was heat-sealed under vacuum, whereby a lithium-ion secondary battery precursor was obtained.

Activation Treatment

The thus obtained lithium-ion secondary battery precursor was maintained at room temperature (25°C) for 24 hours. The lithium-ion secondary battery precursor was then constant-current charged at 0.05 C (0.05C-CC) for 4 hours and rested for 12 hours. Subsequently, the lithium-ion secondary battery precursor was subjected to constant-current constant-voltage charging up to 4.2 V at 0.1 C (0.1C-CCCV), rested for 30 minutes, and then constant-current discharged to 2.8 V at 0.1 C (0.1C-CC). Further, this charge-discharge cycle (charging to 4.2 V at 0.1C-CCCV and discharging to 2.8 V at 0.1C-CC) was repeated five times. Thereafter, the lithium-ion secondary battery precursor was stored at 25°C for 5 days in a fully charged state of 4.2 V (SOC: 100%). In this manner, wound-type batteries (lithium-ion secondary batteries) of Examples 1 to 11, Comparative Examples 1 to 5, and Reference Example were obtained.

[6] Evaluation Methods

The following particle size distribution measurement was performed for the undercoat layer slurries prepared in Examples 1 to 11 and Comparative Examples 1 to 5. For the wound-type batteries of Examples 1 to 11, Comparative Examples 1 to 5, and Reference Example, the safety (heating), the safety (nail penetration), the initial DCIR, and the DCIR after high-temperature storage were evaluated as described below. The evaluation results are shown in Table 5.

Particle Size Distribution

Each undercoat layer slurry (hereinafter, also referred to as "sample") of Examples 1 to 11 and Comparative Examples 1 to 5 in an amount of 1.0 g and 50 mL of water were added to a 100-mL beaker, and aggregates of the sample were crushed with a spatula and lightly mixed using a dropper. Subsequently, the sample in water was dispersed using a benchtop-type ultrasonic cleaner (model W-113, manufactured by Honda Electronics Co., Ltd.). In this process, the benchtop-type ultrasonic cleaner was set to an output of 100 W and 28 kHz, and dispersion was performed for 60 seconds. Thereafter, bubbles formed on the surface of the aqueous solution in the beaker were removed, and the volume-based particle size distribution of the sample was measured by a laser diffraction-scattering method using a particle size distribution analyzer (MICROTRAC MT3300EXII, manufactured by MicrotracBEL Corp.). Based on this measurement, D10, D50, D90, and D99 in the volume-based particle size distribution were determined. The measurement results of D10, D50, D90 and D99 are shown in Table 5.

Safety (Heating)

Each wound-type battery (design capacity: 1 Ah) was constant-current constant-voltage charged at 0.1 C (0.1C-CCCV) up to 4.2 V in a temperature environment of 25°C, and the safety (heating) was evaluated.

A measurement cell was placed in a thermostat chamber heated to 50°C, and the alternating-current resistance at 1 kHz (amplitude: 10 mV) was measured while raising the temperature of the thermostat chamber at a rate of 5°C/min. As the cell temperature, the temperature measured by a temperature measuring terminal arranged on the upper surface of the cell was recorded. For the measurement of the alternating-current resistance, ModuLab XM ECS electrochemical measurement system manufactured by Solartron Analytical was used.

From the thus measured resistance values, the resistance increase start temperature and the resistance change ratio were determined. The resistance increase start temperature was determined as the temperature at which the resistance value reached 1.5 times the resistance value at 50°C, assuming the resistance value at 50°C as 1. The resistance change ratio was determined as a relative ratio of the resistance value at 150°C, assuming the resistance value at 50°C as 1.

The measurement results of the resistance increase start temperature and the resistance change ratio were used to evaluate the safety (heating) based on the following criteria. Acceptable ratings of the safety (heating) are "A" and "B".

A: The resistance increase start temperature was 90°C or lower, and the resistance change ratio was 20 times or more.

B: The resistance increase start temperature was higher than 90°C and the resistance change ratio was 20 times or more, or the resistance increase start temperature was 90°C or lower and the resistance change ratio was less than 20 times.

C: The resistance increase start temperature was higher than 90°C, and the resistance change ratio was less than 20 times.

Forced Internal Short-Circuit Test (Nail Penetration Test)

Each wound-type battery (design capacity: 1 Ah) was constant-current constant-voltage charged at 0.1 C (0.1C-CCCV) up to 4.2 V in a temperature environment of 25°C, and a nail penetration test (nail diameter: 3 mm, nail penetration speed: 1.0 mm/sec) was conducted.

A nail having a diameter of 3 mm was inserted into the middle of the wound-type battery (cell) at a speed of 1.0 mm/sec to short-circuit the positive electrode and the negative electrode inside the battery container. In this process, the short-circuit behavior of the battery was observed.

The battery nail penetration test was conducted multiple times (3 to 6 times) at the same level, and evaluation was made based on the following criteria with respect to a total number of test batteries. Acceptable ratings of the nail penetration test are "A" and "B".

A: The ratio of the number of batteries whose internal temperature exceeded 300°C was 10% or less with respect to the total number of test batteries.

B: The ratio of the number of batteries whose internal temperature exceeded 300°C was higher than 10% but lower than 60% with respect to the total number of test batteries.

C: The ratio of the number of batteries whose internal temperature exceeded 300°C was 60% or higher with respect to the total number of test batteries.

Evaluation of Initial DCIR

[6.4.1] Measurement of Initial DCIR

Each wound-type battery (design capacity: 1 Ah) was constant-current constant-voltage charged at 0.1 C (0.1C-CCCV) up to 4.2 V in a temperature environment of 25°C, and the initial DCIR was measured.

The battery was discharged at a constant current of 0.1 C for 10 seconds (0.1C-CC-10s) and then charged at a constant current of 0.1 C for 10 seconds (0.1C-CC-10s).

Next, the battery was discharged at a constant current of 0.2 C for 10 seconds (0.2C-CC-10s), and then charged at a constant current of 0.2 C for 10 seconds (0.2C-CC-10s).

Next, the battery was discharged at a constant current of 0.5 C for 10 seconds (0.5C-CC-10s), and then charged at a constant current of 0.5 C for 10 seconds (0.5C-CC-10s).

Next, the battery was discharged at a constant current of 1.0 C for 10 seconds (1.0C-CC-10s), and then charged at a constant current of 1.0 C for 10 seconds (1.0C-CC-10s).

Next, the battery was discharged at a constant current of 2.0 C for 10 seconds (2.0C-CC-10s), and then charged at a constant current of 2.0 C for 10 seconds (2.0C-CC-10s).

A first direct-current resistance (DCIR) was determined based on the amount of decrease in voltage due to "CC10s discharging" at each discharge rate of 0.1 C to 2.0 C (= Voltage before initiation of discharging - Voltage at 10th second after initiation of discharging) and each current value (i.e., the current value corresponding to each discharge rate of 0.1 C to 2.0 C).

[6.4.2] Evaluation Method

Based on the above measured values, a first relative value was calculated taking the measured value of the first direct-current resistance (DCIR) of Reference Example (without undercoat layer) as 100, and the initial DCIR was evaluated based on the following criteria.

The thus calculated first relative values of the first direct-current resistance are shown in Table 5. Acceptable ratings of the initial DCIR are "A" and "B".

A: The first relative value was 100 or less.
B: The first relative value was more than 100 but 105 or less.
C: The first relative value was more than 105.

Evaluation of DCIR after High-Temperature Storage

[6.5.1] Measurement of DCIR after High-Temperature Storage

The above-produced wound-type batteries (design capacity: 1 Ah) were each constant-current constant-voltage charged at 0.1 C (0.1C-CCCV) up to 4.2 V in a temperature environment of 25°C, and then left to stand in a charged state for 28 hours in a 60°C atmosphere. In this manner, batteries after high-temperature storage were obtained.
A process for DCIR evaluation was performed in the same manner as the above-described process for evaluation of initial DCIR to determine a second direct-current resistance (DCIR).

[6.5.2] Evaluation Method

Based on the thus-measured values, a second relative value was calculated taking the measured value of the second direct-current resistance (DCIR) of Reference Example (without undercoat layer) as 100, and the DCIR after high-temperature storage was evaluated based on the following criteria.
The thus calculated second relative values of the second direct-current resistance are shown in Table 5. Acceptable ratings of the DCIR after high-temperature storage are "A" and "B".

A: The second relative value was 105 or less.
B: The second relative value was more than 105 but 110 or less.
C: The second relative value was more than 110.

[Table 4]

| | Composition | | | | | | | | | | | | | | | | | |
| | Conductive carbon material (A) | | Olefin resin (B) | | | | Acrylic water-soluble polymer (C) | | | | | Additive (D) | | | | | |
| | Type | Added amount (parts by mass) | Type | Particle size (μm) | Softening point (°C) | Added amount (parts by mass) | Type | MA (parts by mass) | COOH (parts by mass) | OH (parts by mass) | Added amount (parts by mass) | Type | Added amount (parts by mass) | Type | Added amount (parts by mass) | Type | Added amount (parts by mass) |
|---|---|---|---|---|---|---|---|---|---|---|---|---|---|---|---|---|---|
| Reference Example | - | - | - | - | - | - | - | - | - | - | - | - | - | | | - | - |
| Comparative Example 1 | SUPER-P | 20 | W700 : | 1.0 | 132 | 65 | - | - | - | - | - | SBR | 5 | CMC | 10 | - | - |
| Comparative Example 2 | SUPER-P | 20 | W700 | 1.0 | 132 | 65 | PA | 0 | 100 | 0 | 5 | - | - | CMC | 10 | - | - |
| Comparative Example 3 | SUPER-P | 20 | W700 | 1.0 | 132 | 65 | PAA | 100 | 0 | 0 | 5 | - | - | CMC | 10 | - | - |
| Comparative Example 4 | SUPER-P | 20 | W700 | 1.0 | 132 | 65 | C-4' | 30 | 70 | 0 | 5 | - | - | CMC | 10 | - | - |
| Comparative Example 5 | SUPER-P | 20 | W700 | 1.0 | 132 | 65 | C-5' | 34 | 1 | 65 | 5 | - | - | CMC | 10 | - | - |
| Example 1 | SUPER-P | 20 | W700 | 1.0 | 132 | 65 | C-1 | 40 | 50 | 10 | 5 | - | - | CMC | 10 | - | - |
| Example 2 | SUPER-P | 20 | W700 | 1.0 | 132 | 65 | C-2 | 90 | 5 | 5 | 5 | - | - | CMC | 10 | - | - |
| Example 3 | SUPER-P | 20 | W700 | 1.0 | 132 | 65 | C-3 | 79 | 7 | 14 | 5 | - | - | CMC | 10 | - | - |
| Example 4 | SUPER-P | 10 | W700 | 1.0 | 132 | 80 | C-3 | 79 | 7 | 14 | 5 | - | - | CMC | 5 | - | - |
| Example 5 | SUPER-P | 20 | W300 | 3.0 | 132 | 65 | C-3 | 79 | 7 | 14 | 5 | - | - | CMC | 10 | - | - |
| Example 6 | SUPER-P | 20 | W900 | 0.6 | 132 | 65 | C-3 | 79 | 7 | 14 | 5 | - | - | CMC | 10 | - | - |
| Example 7 | SUPER-P | 20 | W950 | 0.6 | 113 | 65 | C-3 | 79 | 7 | 14 | 5 | - | - | CMC | 10 | - | - |
| Example 8 | SUPER-P | 20 | WP100 | 1.0 | 148 | 65 | C-3 | 79 | 7 | 14 | 5 | - | - | CMC | 10 | - | - |
| Example 9 | SUPER-P | 20 | W700 | 1.0 | 132 | 40 | C-3 | 79 | 7 | 14 | 5 | - | - | CMC | 5 | $Al_2O_3$ | 30 |
| Example 10 | SUPER-P | 20 | W700 | 1.0 | 132 | 40 | C-3 | 79 | 7 | 14 | 5 | - | - | CMC | 5 | MC | 30 |
| Example 11 | SUPER-P | 10 | W700 | 1.0 | 132 | 75 | C-3 | 79 | 7 | 14 | 5 | - | - | CMC | 10 | - | - |

[Table 5]

| | Particle size distribution of composition | | | | | | Evaluation results | | | | | | | |
| | Particle size distribution (based on volume) | | | | Ratio | | Safety (heating) | | | Safety (nail penetration) | Battery performance | | | |
| | | | | | | | | | | | Initial | | After high-temperature storage | |
| | D10 (μm) | D50 (μm) | D90 (μm) | D99 (μm) | D99/D10 (μm) | D99/D50 (μm) | Start temperature (°C) | Change ratio (times) | Evaluation | Evaluation | Relative value | Evaluation | Relative Value | Evaluation |
|---|---|---|---|---|---|---|---|---|---|---|---|---|---|---|
| Reference Example | - | - | - | - | - | - | 104.2 | 10.7 | C | C | 100 | (ref) | 100 | (ref) |
| Comparative Example 1 | 0.53 | 0.95 | 1.58 | 3.30 | 6.2 | 3.5 | 95.1 | 28.0 | B | B | 103.5 | B | 116.6 | C |
| Comparative Example 2 | 0.53 | 1.00 | 200 | 5.18 | 9.8 | 5.2 | 97.4 | 21.9 | B | B | 112.7 | C | 126.3 | C |
| Comparative Example 3 | 0.50 | 0.95 | 1.66 | 3.70 | 7.4 | 3.9 | 126.2 | 3.5 | C | C | 123.1 | C | 146.8 | C |
| Comparative Example 4 | 0.47 | 0.94 | 1.71 | 4.61 | 9.9 | 4.9 | 81.6 | 48.6 | A | A | 106.3 | C | 131.7 | C |
| Comparative Example 5 | 0.52 | 1.01 | 2.13 | 5.98 | 11.4 | 5.9 | 75.7 | 32.7 | A | C | 110.4 | C | 184.2 | C |
| Example 1 | 0.54 | 0.95 | 1.51 | 2.99 | 5.6 | 3.2 | 82.9 | 47.2 | A | B | 103.9 | B | 107.1 | B |
| Example 2 | 0.59 | 0.97 | 1.52 | 2.71 | 4.6 | 2.8 | 105.8 | 22.2 | B | B | 104.6 | B | 109.4 | B |
| Example 3 | 0.63 | 0.99 | 1.51 | 2.66 | 4.2 | 2.7 | 86.0 | 45.4 | A | B | 100.3 | B | 97.5 | A |
| Example 4 | 0.62 | 0.98 | 1.48 | 2.42 | 3.9 | 2.5 | 79.9 | 51.2 | A | A | 104.6 | B | 104.9 | A |
| Example 5 | 0.60 | 0.97 | 1.49 | 2.66 | 4.5 | 2.8 | 91.6 | 50.1 | B | A | 102.9 | B | 108.3 | B |
| Example 6 | 0.51 | 1.88 | 3.60 | 7.35 | 14.4 | 3.9 | 84.5 | 42.7 | A | B | 99.3 | A | 97.2 | A |
| Example 7 | 0.54 | 0.95 | 1.65 | 11.18 | 20.8 | 11.8 | 87.6 | 18.3 | B | B | 99.1 | A | 106.9 | B |
| Example 8 | 0.54 | 0.93 | 1.43 | 2.38 | 4.4 | 2.6 | 91.2 | 38.1 | B | B | 98.6 | A | 97.5 | A |
| Example 9 | 0.53 | 0.94 | 1.62 | 5.70 | 10.8 | 6.1 | 95.7 | 27.4 | B | B | 98.0 | A | 96.7 | A |
| Example 10 | 0.47 | 0.93 | 1.81 | 10.49 | 22.2 | 11.2 | 88.7 | 41.3 | A | B | 102.9 | B | 109.0 | B |
| Example 11 | 0.80 | 1.16 | 1.73 | 3.12 | 3.9 | 2.7 | 85.8 | 50.8 | A | A | 99.8 | A | 102.6 | A |

In Tables 4 and 5, "MA" represents a structural unit derived from methacrylamide; "COOH" represents a structural unit derived from a carboxy group-containing vinyl monomer; "OH" represents a structural unit derived from a hydroxy group-containing vinyl monomer; "Start temperature" represents the resistance increase start temperature; "Change ratio" represents the resistance change ratio; "Initial" represents the initial DCIR; "After high-temperature storage" represents the DCIR after high-temperature storage; "PA" represents a polyacrylic acid; and "PAA" represents a polyacrylamide.

The acrylic water-soluble polymer (C) of Comparative Examples 1 to 5 did not satisfy the following: the content of the structural unit derived from a (meth)acrylamide is from 35% by mass or 30% by mass to 95% by mass with respect to the total amount of the acrylic water-soluble polymer (C); and the content of the structural unit derived from a vinyl monomer was from 5% by mass to 65% by mass or 70% by mass with respect to the total amount of the acrylic water-soluble polymer (C). Therefore, in Comparative Example 1, the evaluation result of the DCIR after high-temperature storage was "C". In Comparative Examples 2 and 4, the evaluation results of the initial DCIR and the DCIR after high-temperature storage were "C". In Comparative Example 3, the evaluation results of the safety (heating), the safety (nail penetration), the initial DCIR, and the DCIR after high-temperature storage were all "C". In Comparative Example 5, the evaluation results of the safety (nail penetration), the initial DCIR, and the DCIR after high-temperature storage were "C".

From these results, the compositions of Comparative Examples 1 to 5 were found to be not suitable for the formation of an electrode excellent in safety, in which the charge-discharge initial direct-current resistance is kept low and an increase in the direct-current resistance in a high-temperature environment (particularly after long-term storage) is inhibited.

The compositions of Examples 1 to 11 contained the conductive carbon material (A), the olefin resin (B), and the acrylic water-soluble polymer (C). The acrylic water-soluble polymer (C) satisfied the following: the content of the structural unit derived from a (meth)acrylamide is from 35% by mass or 30% by mass to 95% by mass with respect to the total amount of the acrylic water-soluble polymer (C); and the content of the structural unit derived from a vinyl monomer was from 5% by mass to 65% by mass or 70% by mass with respect to the total amount of the acrylic water-soluble polymer (C). Therefore, in Examples 1 to 11, the evaluation results of the safety (heating), the safety (nail penetration), the initial DCIR, and the DCIR after high-temperature storage were "A" or "C".

From these results, the compositions of Examples 1 to 11 were found to be suitable for the formation of an electrode excellent in safety, in which the charge-discharge initial direct-current resistance is kept low and an increase in the direct-current resistance in a high-temperature environment (particularly after long-term storage) is inhibited.

The disclosure of Japanese Patent Application No. 2023-052346 filed on March 28, 2023, is hereby incorporated by reference in its entirety.

All the documents, patent applications, and technical standards that are described in the present specification are hereby incorporated by reference to the same extent as if each individual document, patent application, or technical standard is concretely and individually described to be incorporated by reference.

**Claims**

1. A composition, comprising:

    a conductive carbon material (A);
    an olefin resin (B); and
    an acrylic water-soluble polymer (C), wherein:

       the acrylic water-soluble polymer (C) contains a structural unit derived from a (meth)acrylamide, and a structural unit derived from a vinyl monomer having at least one of a carboxy group or a hydroxy group,
       a content of the structural unit derived from a (meth)acrylamide is from 35% by mass to 95% by mass with respect to a total amount of the acrylic water-soluble polymer (C), and
       a content of the structural unit derived from a vinyl monomer having at least one of a carboxy group or a hydroxy group is from 5% by mass to 65% by mass with respect to the total amount of the acrylic water-soluble polymer (C).

2. The composition according to claim 1, wherein:

    a content of the conductive carbon material (A) is from 1% by mass to 30% by mass with respect to a total amount of the composition,
    a content of the olefin resin (B) is from 30% by mass to 90% by mass with respect to the total amount of the composition, and

a content of the acrylic water-soluble polymer (C) is from 1% by mass to 20% by mass with respect to the total amount of the composition.

3. The composition according to claim 1, wherein the olefin resin (B) contains an ethylene resin or a propylene resin.

4. The composition according to claim 1, wherein the olefin resin (B) has a particle size of from 0.1 $\mu$m to 9.0 $\mu$m, and a softening point of 70°C or higher.

5. The composition according to claim 1, wherein the acrylic water-soluble polymer (C) contains a structural unit derived from a (meth)acrylamide, a structural unit derived from a carboxy group-containing vinyl monomer, and a structural unit derived from a hydroxy group-containing vinyl monomer.

6. The composition according to claim 1, wherein the acrylic water-soluble polymer (C) has a Tg of 150°C or higher.

7. The composition according to claim 1, further comprising an additive (D), wherein:
a content of the additive (D) is from 1% by mass to 50% by mass with respect to the total amount of the composition.

8. The composition according to claim 7, wherein the additive (D) contains carboxymethyl cellulose.

9. The composition according to claim 7, wherein the additive (D) contains at least one of a thermally expandable microcapsule having a maximum volume expansion temperature of from 70°C to 180°C, or an inorganic oxide filler.

10. The composition according to claim 1, wherein a ratio (D99/D10) of a particle size distribution D99 with respect to a particle size distribution D10, as measured by a laser diffraction-scattering method, is 35 or lower.

11. The composition according to claim 1, wherein a particle size distribution D99 measured by a laser diffraction-scattering method is 20 $\mu$m or less.

12. The composition according to claim 1, wherein a ratio (D99/D50) of a particle size distribution D99 with respect to a particle size distribution D50, as measured by a laser diffraction-scattering method, is 20 or lower.

13. An undercoat layer, comprising the composition according to any one of claims 1 to 12.

14. An electrode, comprising:

   a current collector;
   the undercoat layer according to claim 13; and
   a mixture layer.

15. The electrode according to claim 14, wherein the current collector, the undercoat layer, and the mixture layer are layered in this order.

16. A lithium-ion secondary battery, comprising the electrode according to claim 14.

FIG.1

FIG.2

# FIG.3

# FIG.4

## INTERNATIONAL SEARCH REPORT

| International application No. |
|---|
| **PCT/JP2024/019608** |

**A. CLASSIFICATION OF SUBJECT MATTER**

*H01M 4/66*(2006.01)i; *H01M 4/13*(2010.01)i
FI:  H01M4/66 A; H01M4/13

According to International Patent Classification (IPC) or to both national classification and IPC

**B. FIELDS SEARCHED**

Minimum documentation searched (classification system followed by classification symbols)

H01M4/66; H01M4/13

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2019/189866 A1 (MITSUI CHEMICALS, INC.) 03 October 2019 (2019-10-03) claims, paragraphs [0031]-[0033], examples | 1-16 |
| Y | JP 2013-229187 A (SHOWA DENKO K.K.) 07 November 2013 (2013-11-07) claim 1, paragraph [0022], example 4 | 1-16 |
| Y | JP 2020-24896 A (ARAKAWA CHEMICAL INDUSTRIES, LTD.) 13 February 2020 (2020-02-13) claim 1, paragraphs [0008]-[0011], examples 1-8, 1-9 | 1-16 |
| P, X | JP 2023-147402 A (SAMSUNG SDI CO., LTD.) 13 October 2023 (2023-10-13) | 1-7, 13-16 |

☐ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **16 August 2024** | **27 August 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**
Information on patent family members

International application No.

**PCT/JP2024/019608**

| Patent document cited in search report | | | Publication date (day/month/year) | Patent family member(s) | | | Publication date (day/month/year) |
|---|---|---|---|---|---|---|---|
| WO | 2019/189866 | A1 | 03 October 2019 | US | 2021/0043928 | A1 | |
| | | | | claims, paragraphs [0064]-[0069], examples | | | |
| | | | | EP | 3783700 | A1 | |
| | | | | KR | 10-2020-0106963 | A | |
| | | | | CN | 111758174 | A | |
| JP | 2013-229187 | A | 07 November 2013 | (Family: none) | | | |
| JP | 2020-24896 | A | 13 February 2020 | CN | 109935834 | A | |
| | | | | claim 1, paragraphs [0013]-[0017], examples 1-8, 1-9 | | | |
| | | | | KR | 10-2019-0074228 | A | |
| | | | | CN | 114267836 | A | |
| JP | 2023-147402 | A | 13 October 2023 | KR | 10-2023-0141618 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019189866 A
- WO 2018198689 A
- JP 2019153443 A
- JP 2023052346 A